# EUROPÄISCHE PATENTSCHRIFT

(11) **EP 2 760 579 B1**
(45) Veröffentlichungstag und Bekanntmachung des Hinweises auf die Patenterteilung: **28.12.2016**
(21) Anmeldenummer: 12765990.2
(22) Anmeldetag: 06.09.2012
(51) Int. Cl.: B01J 20/20, B01J 20/02, B01J 20/08, B01J 20/10, B01J 20/22, B01J 20/24, B01J 20/26, B01J 20/28, B01J 20/30, B01D 53/02, B01D 53/04

(54) **SELBSTTRAGENDE STRUKTUREN MIT ADSORPTIVEN EIGENSCHAFTEN**
SELF-SUPPORTING STRUCTURES HAVING ADSORPTIVE PROPERTIES
STRUCTURES AUTONOMES AYANT DES PROPRIÉTÉS ADSORBANTES

(30) Priorität: 30.09.2011 DE 102011114625; 29.03.2012 DE 102012006272
(43) Veröffentlichungstag der Anmeldung: 06.08.2014
(73) Patentinhaber: Blücher GmbH, 40699 Erkrath (DE)
(72) Erfinder: SCHRAGE, Christian, 01097 Dresden (DE); FICHTNER, Sven, 14727 Premnitz (DE); GIEBELHAUSEN, Jann-Michael, 14712 Rathenow (DE); KOPPKA, Christian, 40699 Erkrath (DE); KRENKEL, Sharon, 04279 Leipzig (DE)
(74) Vertreter: Strehlke, Ingo Kurt
(86) Internationale Anmeldenummer: PCT/EP2012/003742
(87) Internationale Veröffentlichungsnummer: WO 2013/045024

(56) Entgegenhaltungen:
- EP-A1- 0 492 081
- Jürgen Seibel: "Hydrokolloide", Roempp Chemie Lexikon Online, 1. August 2004 (2004-08-01), Seiten 1-1, XP55043649, Gefunden im Internet: URL:http://www.roempp.com/prod/roempp.php [gefunden am 2012-11-09]
- JÖRG WINGENDER ET AL: "Dispersion", INTERNET CITATION, Juli 2011 (2011-07), Seiten 1-2, XP002680592, Gefunden im Internet: URL:http://www.roempp.com/prod/roempp.php [gefunden am 2012-07-23]
- LIN Y-B ET AL: "Removal of organic compounds by alginate gel beads with entrapped activated carbon", JOURNAL OF HAZARDOUS MATERIALS, ELSEVIER, AMSTERDAM, NL, Bd. 120, Nr. 1-3, 11. April 2005 (2005-04-11), Seiten 237-241, XP004847966, ISSN: 0304-3894, DOI: 10.1016/J.JHAZMAT.2005.01.010

## Beschreibung

Die vorliegende Erfindung betrifft das Gebiet der Adsorptionsfiltertechnologie.

Insbesondere betrifft die vorliegende Erfindung selbsttragende dreidimensionale adsorptive Strukturen, insbesondere adsorptive Formkörper, welche eine Vielzahl von einzelnen Adsorberpartikeln umfassen. Darüber hinaus betrifft die vorliegende Erfindung ein diesbezügliches Herstellungsverfahren.

Weiterhin betrifft die vorliegende Erfindung eine Verwendung eines Hydrokolloids zum Erhalt der selbsttragenden dreidimensionalen adsorptiven Struktur nach der Erfindung. Weiterer Gegenstand der vorliegenden Erfindung ist zudem eine Verwendung der selbsttragenden dreidimensionalen adsorptiven Struktur nach der Erfindung. Schließlich betrifft die vorliegende Erfindung Filter, welche die selbsttragende dreidimensionale adsorptive Struktur nach der Erfindung umfassen.

Zur Aufreinigung oder Aufbereitung von fluiden Medien, wie insbesondere Gasen oder Gasgemischen, wie z. B. Luft, oder aber Flüssigkeiten, wie z. B. Wasser, kommen oft partikuläre Systeme auf Basis von Teilchen mit spezifischer Wirkung (z. B. Adsorbentien, Ionenaustauscher, Katalysatoren etc.) zum Einsatz. So ist beispielsweise die Verwendung von Adsorberpartikeln zur Entfernung von Gift- oder Schadstoffen und Gerüchen aus Gas- oder Luftströmen oder aber aus Flüssigkeiten aus dem Stand der Technik bekannt.

Die Verwendung loser Schüttungen von derartigen Teilchen, vorzugsweise von Adsorberpartikeln, insbesondere in Form von so genannten Schüttfiltern, stellt dabei eine zentrale Anwendungsform dar, um die betreffenden Partikel, wie z. B. Adsorberpartikel, mit dem betreffenden Gas oder der betreffenden Flüssigkeit in Kontakt zu bringen.

Nachteilig an der Verwendung loser Schüttungen ist jedoch, dass diese meist mit einem hohen Druckverlust und somit einer verringerten Adsorptionskapazität verbunden ist. Darüber hinaus wird die Bildung von Kanälen innerhalb der Schüttung gefördert, so dass es zum Durchbruch von noch nicht gereinigtem Medium kommen kann.

Insbesondere sind lose Schüttungen von Adsorberpartikeln auch insofern nachteilig, als diese nur einer eingeschränkten geometrischen Formgebung zugänglich sind, d. h. eine individuelle und insbesondere zweckgerichtete Anpassung der geometrischen Form an den Verwendungszweck ist kaum umsetzbar, zumal auf Basis von Schüttungen keine starren Formkörper erhalten werden können.

Aus der DE 38 13 564 A1 und aus der zu derselben Patentfamilie gehörenden EP 0 338 551 A2 ist eine Aktivkohlefilterschicht für ABC-Schutzmasken bekannt, welche ein hochluftdurchlässiges, im Wesentlichen formstabiles dreidimensionales Trägergerüst umfasst, an welchem eine Schicht von körnigen, insbesondere kugelförmigen Aktivkohleteilchen mit Durchmessern von 0,1 bis 1 mm fixiert ist, wobei es sich bei dem Trägergerüst um ein Geflecht aus Drähten, Monofilamenten oder Stegen oder um einen großporigen retikulierten Polyurethanschaumstoff handeln soll. Nachteilig bei dem dort beschriebenen System ist die Tatsache, dass das verwendete Trägermaterial einen relativ aufwendigen Bearbeitungsprozess im Zusammenhang mit der Beaufschlagung mit den betreffenden Partikeln erfordert. Weiterhin sind die ausgewählten Trägermaterialien nicht universell einsetzbar bzw. formbar, so dass die resultierenden Filter auf wenige Anwendungen beschränkt sind.

Weiterhin ist aus der DE 42 39 520 A1 ein Hochleistungsfilter bekannt, welches aus einem dreidimensionalen Trägergerüst besteht, auf welchem mittels einer Haftmasse Adsorberteilchen fixiert sind, wobei das Trägergerüst von einem thermisch stabilen und hydrolysebeständigen Kunststoff ummantelt ist. Insbesondere handelt es sich bei dem Trägergerüst um einen großporigen retikulierten Polyurethanschaumstoff, welcher von einem Silikonharz, Polypropylen, hydrolysefesten Polyurethan, einem Acrylat, einem Synthesekautschuk oder mit Fluorpolymeren ummantelt ist. Der Herstellungsprozess für diese mitunter mehrfach ummantelten Strukturen, insbesondere die Herstellung der Trägerstruktur, ist relativ aufwendig. Auch eine individuelle bzw. zweckgerichtete Formgebung ist nur in eingeschränktem Maße möglich.

Des Weiteren sind aus der DE 43 43 358 A1 Aktivkohle enthaltende poröse Körper bekannt, welche aus Platten und Agglomeraten aus vermahlener, in einer porösen SiO₂-Matrix eingebauten Aktivkohle bestehen. Insbesondere werden dort poröse Platten oder Körper mit adsorbierenden Eigenschaften beschrieben, bei denen Aktivkohlekörner oder Aktivkohlekügelchen bzw. Aktivkohle enthaltende Körner oder Kügelchen mithilfe einer Silikatlösung aneinander zum Haften gebracht sind und nachfolgend die Silikatbrücken in Silicagelbrücken umgewandelt werden. Auch hierbei ist die festgelegte Geometrie dieser porösen Körper bzw. deren mangelnde Flexibilität im Zusammenhang mit der Formgebung nachteilig. Darüber hinaus weisen die Körper als solche keine ausreichende mechanische Stabilität auf. Ebenfalls nachteilig ist, dass die aktivkohlehaltigen Partikel vollständig mit der Silikatlösung benetzt werden, so dass ein großer Teil der Kapazität dieser Partikel nicht mehr für adsorptive Prozesse zur Verfügung steht.

Gleichermaßen sind aus der DE 43 31 586 C2 Agglomerate aus Aktivkohle bekannt, bei denen Aktivkohleteilchen mit einem Durchmesser zwischen 0,1 bis 5 mm durch leichten Druck unter Erwärmung um ein etwa gleichgroßes Teilchen aus Pech angeordnet und zum Haften gebracht sind und nachfolgend das Pechteilchen unschmelzbar gemacht und in Aktivkohle umgesetzt wird, wobei ein definierter freier Zwischenraum zwischen den Teilchen im Agglomerat vorliegen soll. Nachteilig bei den dort beschriebenen Teilchen bzw. Agglomeraten ist die relativ aufwendige, energieintensive Herstellung. Darüber hinaus ist die mechanische Stabilität nur unzureichend, was insbesondere in einem hohen Verschleiß resultieren kann. Auch ist infolge der mangelnden Stabilität eine Weiterverarbeitung zu Formkörpern unter Verpressung nur begrenzt möglich.

Gleiches trifft auch auf die porösen Körper mit adsorptiven Eigenschaften gemäß der DE 42 38 142 A1 zu, welche Adsorberteilchen betrifft, die über Brücken aus einem anorganischem Material, insbesondere Tonerde, miteinander verbunden sind, wobei die Hohlräume zwischen den Adsorberteilchen 10 bis 100 % des Volumens der Adsorberteilchen betragen sollen. Auch die dort beschriebenen porösen Körper weisen eine nur geringe mechanische Stabilität auf, da die Brücken aus anorganischem Material mechanischer Einwirkung nur in geringem Maße standhalten können, so dass eine Verwendung unter mechanischer Belastung und eine Weiterverarbeitung zu Formkörpern unter Verpressung nicht ohne Weiteres möglich ist. Nachteilig ist in diesem Zusammenhang auch, dass eine zweckgerichtete Formgebung mitunter nicht möglich ist.

Weiterhin betrifft die DE 202 21 547 U1 poröse Aktivkohlekörper mit einer ersten Gerüststruktur auf Basis von karbonisiertem Harz sowie einer weiteren Gerüststruktur auf Basis von Keramikmaterial und/oder gebranntem Feuerfestmaterial und Bindemittel, wobei die Aktivkohlepartikel an der Gerüststruktur fixiert sind. Durch die Fixierung der Aktivkohlepartikel mittels Einschmelzen in das Harz sind diese jedoch zu großen Teilen bedeckt und für zu reinigende Gase oder Flüssigkeiten nur eingeschränkt zugänglich, so dass es zu Verlusten hinsichtlich der Adsorptionskapazität kommt.

Die wissenschaftliche Publikation gemäß Lin et al.: "Removal of organic compounds by alginate gel beads with entrapped activated carbon", Journal of Hazardous Materials, Elsevier 2005, Vol. 12, Seiten 237 bis 241, betrifft die Herstellung und Charakterisierung von Alginatkapseln, welche pulverförmige Aktivkohle enthalten. Bei den beschriebenen Kapseln mit einem Durchmesser von etwa 2 mm wird pulverförmige Aktivkohle in ein Alginat-Gel eingelagert, wobei die Quervernetzung und Aushärtung der resultierenden Alginatkapseln durch die Zugabe von Metallionen, insbesondere Kalziumchlorid, erfolgt.

Die EP 0 492 081 A1 betrifft dünnwandige wabenförmige Strukturen auf Basis von Aktivkohle, welche zur Adsorption von Kohlenwasserstoffdämpfen eingesetzt werden. Die wabenförmigen Strukturen werden hergestellt, indem eine Mischung auf Basis von Celluloseether bzw. dessen Derivaten, wie beispielsweise Methylcellulose, einem zusätzlichen Bindemittel, wie beispielsweise Polyvinyalkoholharzen, und Aktivkohleteilchen in eine wabenförmige Form extrudiert und anschließend bei Temperaturen von ca. 300 °C getrocknet werden.

Weiterhin betrifft die wissenschaftliche Publikation gemäß Park et al.: "Activated carbon-containing alginate adsorbent for the simultaneous removal of heavy metals and toxic organics", Process Biochemistry, Vol. 42, Seiten 1371 bis 1377, Alginatkügelchen, welche Aktivkohle enthalten und darüber hinaus zur Entfernung von Schwermetallionen sowie toxischen organischen Stoffen geeignet sind.

Die US 6,989,102 B1 betrifft ebenfalls adsorptive Kügelchen auf Basis von Alginat und Aktivkohle, welche zur Entfernung von Schwermetallen geeignet sind.

Der vorliegenden Erfindung liegt daher die Aufgabe zugrunde, dreidimensionale adsorptive Strukturen bzw. Formkörper für die Entfernung von Gift-, Schad- oder Geruchsstoffen aus fluiden Medien, wie beispielsweise Gasströmen oder Wasser, bereitzustellen, welche die zuvor geschilderten Nachteile des Standes der Technik zumindest weitgehend vermeiden oder aber wenigstens abschwächen.

Insbesondere liegt der vorliegenden Erfindung die Aufgabe zugrunde, dreidimensionale adsorptive Strukturen bzw. Formkörper bereitzustellen, welche eine hervorragende Adsorptionskapazität besitzen, insbesondere im Hinblick auf in fluiden Medien, wie Gasströmen und Flüssigkeiten, befindliche Gift-, Schad- und/oder Geruchsstoffe, und darüber hinaus unter mechanischer Belastung stabil sind und bei denen eine individuelle, insbesondere zweckgerichtete Formgebung in verschiedenste geometrische Formen möglich ist. Zudem soll das diesbezügliche Herstellungsverfahren zum Erhalt der dreidimensionalen Formkörper nach der Erfindung einen geringen Material- und Energieverbrauch ermöglichen.

Die zuvor geschilderte Aufgabenstellung wird vorschlagsgemäß - gemäß einem **ersten** Aspekt der vorliegenden Erfindung - durch den Gegenstand von Patentanspruch 1 gelöst, welcher eine erfindungsgemäße selbsttragende dreidimensionale adsorptive Struktur betrifft; weitere, vorteilhafte Ausgestaltungen dieses Erfindungsaspekts sind Gegenstand der diesbezüglichen Unteransprüche.

Weiterer Gegenstand der vorliegenden Erfindung - gemäß einem **zweiten** Aspekt der vorliegenden Erfindung - ist das erfindungsgemäße Verfahren gemäß dem unabhängigen Verfahrensanspruch 9 zur Herstellung der adsorptiven Struktur nach der Erfindung; weitere, vorteilhafte Ausgestaltungen dieses Erfindungsaspekts sind Gegenstand der diesbezüglichen Verfahrensunteransprüche.

Des Weiteren sind Gegenstand der vorliegenden Erfindung - gemäß einem **dritten** Aspekt der vorliegenden Erfindung - die erfindungsgemäßen Verwendungen der selbsttragenden dreidimensionalen adsorptiven Struktur nach der vorliegenden Erfindung, wie sie in den weiteren unabhängigen Verwendungsansprüchen definiert sind.

Schließlich ist Gegenstand der vorliegenden Erfindung - gemäß einem **vierten** Aspekt der vorliegenden Erfindung - ein erfindungsgemäßes Filter nach dem diesbezüglichen Anspruch, wobei das erfindungsgemäße Filter eine adsorptive Struktur nach der vorliegenden Erfindung aufweist; weitere, vorteilhafte Ausgestaltungen dieses Erfindungsaspekts sind Gegenstand der diesbezüglichen Unteransprüche.

Es versteht sich von selbst, dass Ausgestaltungen, Ausführungsformen, Vorteile und dergleichen, welche nachfolgend zu Zwecken der Vermeidung von Wiederholungen nur zu einem Erfindungsaspekt angeführt sind, selbstverständlich auch in Bezug auf die übrigen Erfindungsaspekte entsprechend gelten.

Weiterhin versteht es sich von selbst, dass bei den nachfolgenden Werte-, Zahlen- und Bereichsangaben die angegebenen Bereiche nicht beschränkend zu verstehen sind; es versteht sich für den Fachmann von selbst, dass einzelfallbedingt oder anwendungsbezogen von den angegebenen Bereichen und Angaben abgewichen werden kann, ohne dass der Rahmen der vorliegenden Erfindung verlassen ist.

Zudem gilt, dass alle im Folgenden genannten Werte- bzw. Parameterangaben oder dergleichen grundsätzlich mit genormten bzw. standardisierten oder explizit angegebenen Bestimmungsverfahren oder aber andernfalls mit dem Fachmann auf diesem Gebiet an sich geläufigen Bestimmungs- bzw. Messmethoden ermittelt bzw. bestimmt werden können.

Im Übrigen gilt, dass bei allen nachstehend aufgeführten relativen bzw. prozentualen, insbesondere gewichtsbezogenen Mengenangaben, zu beachten ist, dass diese Angaben im Rahmen der vorliegenden Erfindung vom Fachmann derart auszuwählen bzw. zu kombinieren sind, dass in der Summe - gegebenenfalls unter Einbeziehung weiterer Komponenten bzw. Inhaltsstoffe, insbesondere wie nachfolgend definiert - stets 100 % bzw. 100 Gew.-% resultieren. Dies versteht sich für den Fachmann aber von selbst.

Dies vorausgeschickt, wird im Folgenden die vorliegende Erfindung näher beschrieben.

Gegenstand der vorliegenden Erfindung ist somit - gemäß einem **ersten** Aspekt der vorliegenden Erfindung - eine selbsttragende dreidimensionale adsorptive Struktur, insbesondere adsorptiver Formkörper, wobei die adsorptive Struktur eine Vielzahl von einzelnen Adsorberpartikeln umfasst,

wobei die einzelnen Adsorberpartikel mittels mindestens eines Hydrokolloids zu einer selbsttragenden dreidimensionalen adsorptiven Struktur, insbesondere einem adsorptiven Formkörper, verbunden sind und/oder wobei die einzelnen Adsorberpartikel mittels mindestens eines Hydrokolloids miteinander verbunden und/oder aneinander fixiert und/oder aneinander zum Haften gebracht sind,
wobei das Hydrokolloid ausgewählt ist aus der Gruppe von Gelatine, Kollagen, Xanthan, Dextran, Agar, Carrageen, Pektin, Gummi arabicum, Galactomannan sowie deren Mischungen oder Kombinationen,
wobei die Adsorberpartikel kornförmig ausgebildet sind und absolute Teilchendurchmesser im Bereich von 0,001 bis 3 mm aufweisen,
wobei die adsorptive Struktur das Hydrokolloid und die Adsorberpartikel in einem massebezogenen Verhältnis von Hydrokolloid zu Adsorberpartikel "[Hydrokolloid : Adsorberpartikel]" im Bereich von [1 : 100] bis [1 : 1], bezogen auf das jeweilige Trockengewicht, aufweist und
wobei die adsorptive Struktur porös und/oder schaumartig ausgebildet ist und wobei die adsorptive Struktur ein Porensystem aufweist.

Die grundlegende Idee der vorliegenden Erfindung ist somit darin zu sehen, dass partikuläre bzw. diskrete Adsorbentien bzw. Adsorberpartikel mittels eines Hydrokolloids als Bindemittel untereinander zum Erhalt einer dreidimensionalen Struktur mit adsorptiven Eigenschaften verklebt bzw. fixiert werden. Der Erhalt der dreidimensionalen Struktur erfolgt sozusagen dadurch, dass die Adsorbentien bzw. Adsorberpartikel mittels des Hydrokolloids stegartig bzw. punktförmig miteinander verklebt bzw. aneinander fixiert sind und sozusagen ein Gerüst und/oder eine Matrix auf Basis von Adsorberpartikeln und Hydrokolloid ausgebildet wird. In ihrer Gesamtheit bilden die diskreten Adsorbentien in Kombination mit dem Hydrokolloid somit eine stabile dreidimensionale Struktur - d. h. einen starren (Form-)Körper, welcher zumindest im Wesentlichen nicht reversibel verformbar ist - aus.

Im Rahmen der vorliegenden Erfindung war es vollkommen überraschend, dass unter Verwendung eines Hydrokolloids als Binde- bzw. Haftmittel zur Fixierung und/oder Aneinanderhaftung der Adsorberpartikel überhaupt stabile Strukturen erhalten werden können, welche zudem äußerst individuell, insbesondere zweckgerichtet bzw. maßgeschneidert formbar sind, vorzugsweise durch Ausgießen in die gewünschte Form, andererseits aber dennoch für die zu adsorbierenden Stoffe gut zugänglich sind und somit eine hervorragende Adsorptionskapazität, insbesondere im Hinblick auf Gift-, Schad- oder Geruchsstoffe, wie sie in fluiden Medien auftreten können, besitzen, wobei zudem die Porosität der Formkörper bzw. der dreidimensionalen Strukturen individuell eingestellt werden kann.

Was den Begriff "Hydrokolloid", wie er im Rahmen der vorliegenden Erfindung verwendet wird und wie er dem Fachmann als solcher wohlbekannt ist, anbelangt, so ist dieser sehr breit zu verstehen. Im Allgemeinen werden unter Hydrokolloiden zumindest im Wesentlichen wasserlösliche, natürliche oder synthetische Polymere verstanden, welche in wässrigen Systemen Gele bzw. viskose Lösungen bilden. Dabei handelt es sich üblicherweise um Substanzen, welche den Stoffklassen der Proteine oder Polysaccharide angehören, wobei eine Vielzahl von Hydrokolloiden aus der Natur stammt, insbesondere aus Landpflanzen, Algen, Tieren sowie Bakterien. Hydrokolloide werden oftmals als Verdickungsmittel in Kosmetika und Produkten der Nahrungsmittelindustrie eingesetzt. Für weitergehende Einzelheiten zum Begriff "Hydrokolloid" kann verwiesen werden auf Römpp Chemielexikon, 10. Auflage, Georg Thieme Verlag, Stuttgart/New York, Stichwort: "Hydrokolloide", Seite 1837, einschließlich der dort referierten Literatur, deren diesbezüglicher Inhalt hiermit durch Bezugnahme vollumfänglich eingeschlossen ist.

Die Begriffe "selbsttragende dreidimensionale adsorptive Struktur" bzw. "adsorptiver Formkörper", wie sie erfindungsgemäß verwendet werden, bezeichnen insbesondere eine verfestigte bzw. zusammengefügte Anhäufung von zuvor losen bzw. separaten Bestandteilen in Form von einzelnen Adsorberpartikeln unter Verwendung mindestens eines Hydrokolloids als Haft- bzw. Klebemittel, wobei die Verklebung der einzelnen Bestandteile insbesondere unter Ausbildung eines Schaums bzw. einer schaumartigen Struktur stegartig bzw. punktförmig erfolgen kann.

Weiterhin zielen die Begriffe "selbsttragende dreidimensionale adsorptive Struktur" bzw. "adsorptiver Formkörper", wie sie erfindungsgemäß verwendet werden, maßgeblich darauf ab, dass die erfindungsgemäßen Strukturen zudem adsorptive Eigenschaften, insbesondere gegenüber vorzugsweise gasförmigen, mitunter aber auch flüssigen bzw. festen Substanzen bzw. Verbindungen aufweisen, wobei die Adsorptionseigenschaften insbesondere anorganische bzw. organische Verbindungen bzw. Substanzen umfassen. Insbesondere handelt es sich hierbei um Schad- bzw. Giftstoffe, gleichermaßen aber auch um Gerüche bzw. Geruchsstoffe, wie sie in fluiden Medien, beispielsweise Gasströmen und/oder Flüssigkeiten, auftreten können.

Unter dem Begriff "Vielzahl von Adsorberpartikeln" sind im Rahmen der vorliegenden Erfindung jeweils insbesondere mindestens zwei, vorzugsweise mehr als zwei Adsorberpartikel zu verstehen, welche zu einer selbsttragenden dreidimensionalen adsorptiven Struktur verbunden sind. Üblicherweise beträgt die Anzahl der Adsorberpartikel in der erfindungsgemäßen adsorptiven Struktur jedoch mindestens 10, insbesondere mindestens 20, vorzugsweise mindestens 50, bevorzugt mindestens 100, besonders bevorzugt mindestens 1.000.

Insgesamt besitzt die vorliegende Erfindung eine Vielzahl von Vorteilen und Besonderheiten, welche sie gegenüber dem Stand der Technik auszeichnen und nunmehr im Folgenden in nichtabschließender Weise geschildert werden:
Im Rahmen der vorliegenden Erfindung werden erstmalig selbsttragende dreidimensionale adsorptive Strukturen, insbesondere adsorptive Formkörper, bereitgestellt, die eine sich in zielgerichteter Weise ergänzende Kombination von vorteilhaften Eigenschaften besitzen, wie sie im Stand der Technik bislang nicht realisiert werden konnte. So ist es nämlich im Rahmen der vorliegenden Erfindung gelungen, selbsttragende dreidimensionale adsorptive Strukturen mit guter Handhabbarkeit in Anwendung und Herstellung sowie darüber hinaus hervorragender Adsorptionsleistung, guter mechanischer Stabilität und variabler Formgebung, d. h. Erzeugung zweckgerichteter bzw. maßgeschneiderter geometrischer Formen bzw. Formkörper, bereitzustellen.

Zudem ist es sogar möglich, auf Basis der erfindungsgemäßen Konzeption Formkörper bereitzustellen, welche mittels der Formgebung zusätzlich mit definierten Durchbrechungen bzw. Kanälen versehen werden (z. B. wabenartige Formkörper oder dergleichen), ohne dass sich dies nachteilig auf die Stabilität auswirkt. Eine weitere zentrale Besonderheit der vorliegenden Erfindung ist auch darin zu sehen, dass insbesondere durch die Verwendung des Hydrokolloids als Bindemittel bzw. Haftvermittler zur Verbindung und/oder Fixierung und/oder Haftung von diskreten Adsorberpartikeln miteinander bzw. aneinander eine äußerst variable Formgebung der resultierenden selbsttragenden Strukturen möglich ist.

Das erfindungsgemäße Verfahren zur Herstellung der adsorptiven Strukturen als solche nach der Erfindung ermöglicht, die Formkörper in äußerst vielfältigen geometrischen Form herzustellen, was insbesondere auch eine zweckgerichtete bzw. für den jeweiligen Verwendungszweck maßgeschneiderte Formgebung gewährleistet.

Erfindungsgemäß ist weiterhin die Herstellung von Agglomeraten ("Bruchagglomeraten") möglich, welche ebenfalls - vorzugsweise bei Verwendung in Form einer losen Schüttung der Agglomerate - hervorragende Adsorptionseigenschaften sowie eine hohe Stabilität aufweisen. Die Herstellung solcher Bruchagglomerate erfolgt im Allgemeinen durch mechanische Zerkleinerung, vorzugsweise durch Brechen oder Mörsern, größerer Formkörper zu kleineren Bruchagglomeraten. Die Bruchagglomerate sind zwar deutlich kleiner als die zuvor geschilderten Formkörper, allerdings ist die Mikro- bzw. Grundstruktur - d. h. die Art und Weise der Verbindung bzw. Aneinanderhaftung der Adsorberpartikel mittels des Hydrokolloids - zu den größeren Formkörpern identisch.

In völlig überraschender Weise führt die Verwendung des Hydrokolloids als Binde- bzw. Haftmittel zu einer hervorragenden mechanischen Stabilität der erfindungsgemäßen adsorptiven Strukturen sowohl in Form von Formkörpern als auch in Form von Bruchagglomeraten. Insbesondere ermöglicht das Bindemittel eine derart gute Haftung und/oder Fixierung der Adsorberpartikel, dass bereits der Einsatz äußerst geringer Mengen zu einer hervorragenden Stabilität führt und darüber hinaus die Oberfläche der einzelnen Adsorberpartikel größtenteils frei von Bindemittel bleibt. Im Ergebnis werden somit sowohl die Diffusionsvorgänge in der adsorptiven Struktur als auch die Adsorptionsleistung der der adsorptiven Struktur zugrundeliegenden Adsorberpartikel durch das Bindemittel nicht nachteilig beeinträchtigt; dennoch ist die mechanische Stabilität der adsorptiven Strukturen trotz der geringen eingesetzten Mengen an Hydrokolloid hervorragend.

Überraschenderweise wird durch die Verwendung eines Hydrokolloids als Binde- bzw. Haftvermittler zudem ermöglicht, dass die resultierenden adsorptiven Formkörper bzw. adsorptiven Strukturen gute Diffusionseigenschaften für die zu reinigenden fluiden Medien besitzen. So wird die Porenstruktur der einzelnen Adsorberpartikel durch das Bindemittel im Wesentlichen nicht verstopft. Das Bindemittel kann allenfalls - und dies zudem nur in äußerst geringfügigem Maße - in Makroporen eindringen; die für die Reinigung von fluiden Medien besonders relevanten Mikro- oder Mesoporen hingegen bleiben frei von Hydrokolloid. Zudem wird auf Basis des Hydrokolloids ein gut durchlässiges Porensystem, welches den Formkörper durchzieht, bereitgestellt.

Auch weisen die erfindungsgemäßen adsorptiven Strukturen gegenüber physikalischen und chemischen Einflüssen eine äußerst hohe Resistenz bzw. Widerstandsfähigkeit auf; insbesondere bleiben sie bei Druckbelastung stabil und zeigen unter Anwendungsbedingungen eine äußerst gute Beständigkeit. Darüber hinaus liegt die Temperaturbeständigkeit der adsorptiven Strukturen nach der Erfindung bei über 200 °C. Zudem sind die adsorptiven Strukturen bzw. das hierzu eingesetzte Hydrokolloid zumindest weitgehend unlöslich in organischen, aprotischen Lösemitteln, insbesondere Aceton. Die zuvor beschriebenen Eigenschaften lassen den Einsatz der erfindungsgemäßen adsorptiven Strukturen in einem breiten Anwendungsfeld, z. B. auch die Anwendung an Orten mit hohen Temperaturen oder in Anwesenheit von Lösemitteln, zu.

Besonders vorteilhaft an den erfindungsgemäßen adsorptiven Strukturen ist zudem, dass diese sowohl bei ihrer Verwendung bzw. ihrem Einsatz als Filter- bzw. Adsorptionsmaterial als auch bei ihrer Herstellung äußerst gut handhabbar sind. Die in Rede stehenden Formkörper sind nämlich üblicherweise frei von giftigen Stoffen, vor allem weisen sie im Allgemeinen keine toxischen Lösemittel oder dergleichen auf. Auch der Herstellungsprozess erfordert keine giftigen bzw. flüchtigen toxischen Substanzen, insbesondere Lösungsmittel. Zudem ist die Weiterverarbeitung der adsorptiven Strukturen leicht zu handhaben; so sind auch nachträgliche Formgebungen bzw. -veränderungen, beispielsweise durch Sägen oder Schneiden, möglich. Darüber hinaus können die adsorptiven Strukturen nach der Erfindung in einfacher Weise mit Wasser gereinigt werden. Zudem sind die erfindungsgemäßen adsorptiven Strukturen aufgrund ihrer Ungiftigkeit auch lebensmitteltauglich und für medizinische Anwendungen geeignet. Weiterhin zeichnen sich die erfindungsgemäßen adsorptiven Strukturen insbesondere durch eine geringe Dichte und somit ein geringes Gewicht aus, was für bestimmte Anwendungen, beispielsweise als Filtermaterial für ABC-Schutzmasken, äußerst vorteilhaft ist.

Die erfindungsgemäßen selbsttragenden dreidimensionalen adsorptiven Strukturen können in vielfältiger Art und Weise ausgestaltet werden. Mögliche Ausgestaltungen der Erfindung werden zum besseren Verständnis im Folgenden veranschaulicht:
Was das eingesetzte Hydrokolloid anbelangt, so kann es erfindungsgemäß vorgesehen sein, wenn dieses ein natürliches bzw. naturidentisches Hydrokolloid ist. In diesem Zusammenhang kann es insbesondere vorgesehen sein, dass das Hydrokolloid pflanzlichen bzw. bakteriellen bzw. tierischen Ursprungs ist.

Weiterhin kann es im Rahmen der vorliegenden Erfindung vorgesehen sein, dass das Hydrokolloid ein Makromolekül ist bzw. eine Vielzahl von Makromolekülen aufweist. Üblicherweise weist ein solches Makromolekül bzw. das Hydrokolloid eine mittlere Molmasse, insbesondere eine gewichtsmittlere Molmasse, im Bereich von 5.000 bis 500.000 g/mol, insbesondere im Bereich von 10.000 bis 400.000 g/mol, vorzugsweise im Bereich von 12.500 bis 300.000 g/mol, bevorzugt im Bereich von 15.000 bis 250.000 g/mol, auf. Insbesondere kann das gewichtsmittlere Molekulargewicht (M_{w}) mit Gelpermeationschromatographie (GPC) bestimmt werden, insbesondere gemäß standardisierten Mess- bzw. Bestimmungsmethoden (z. B. DIN 55672, ASTM D 3536-91 oder OECD TG 119 (1996)).

Was die Stoffklasse des eingesetzten Hydrokolloids anbelangt, so ist das Hydrokolloid erfindungsgemäß ausgewählt aus der Gruppe von von Gelatine, Kollagen, Xanthan, Dextran, Agar, Carrageen, Pektin, Gummi arabicum, Galactomannan sowie deren Mischungen oder Kombinationen, vorzugsweise Gelatine, Kollagen sowie deren Derivaten und Mischungen oder Kombinationen. Besonders bevorzugt ist das Hydrokolloid jedoch Gelatine, da diese auch bei Einsatz geringer Mengen eine hervorragende Haftung ermöglicht. Hydrokolloide besitzen gegenüber herkömmlichen Binde- und Haftvermittlern den Vorteil, dass sie nicht toxisch und darüber hinaus sogar lebensmittelkompatibel sind. Insbesondere entstehen bei der Verarbeitung keine giftigen bzw. gesundheitsschädlichen Dämpfe, was sich auch positiv auf die Ökonomie des Herstellungsprozesses der erfindungsgemäßen Strukturen auswirkt, da keine aufwendigen Sicherheitsvorkehrungen zur Entfernung der Dämpfe notwendig sind.

Gemäß einer besonders bevorzugten Ausführungsform kann es im Rahmen der vorliegenden Erfindung vorgesehen sein, dass das Hydrokolloid Gelatine und/oder Kollagen und/oder deren Derivate ist. Was die Derivate im Besonderen anbelangt, so können diese sauer oder basisch hergestellt sein bzw. chemisch modifiziert sein.

Unter dem Begriff "Gelatine" wird im Rahmen der vorliegenden Erfindung insbesondere ein Polypeptid verstanden, welches vornehmlich durch Hydrolyse des in Haut und Knochen von Tieren enthaltenen Kollagens unter sauren oder basischen Bedingungen gewonnen wird. Dabei führt die Gewinnung von Gelatine unter sauren Bedingungen zu der so genannten Typ A-Gelatine bzw. die Gewinnung unter alkalischen Bedingungen zu der so genannten Typ B-Gelatine. In Wasser, insbesondere unter gleichzeitigem Einfluss von Wärme, quillt Gelatine stark auf und löst sich darin unter Bildung einer viskosen Lösung, welche schließlich unterhalb von 35 °C gallertartig erstarrt. Was etwaige chemische Modifizierungen von Gelatine anbelangt, so können diese insbesondere durch Reaktion vor allem der Aminosäurereste mit mono- oder polyfunktionellen Reagenzien, wie beispielsweise Acylierungsmitteln, Aldehyden, Epoxiden, HalogenVerbindungen, Cyanamid oder aktivierten ungesättigten Verbindungen, erfolgen. Auf diese Weise kann die Gelatine in ihren Eigenschaften breit variiert werden, beispielsweise im Hinblick auf das Löslichkeitsverhalten und die Ausbildung gelartiger Strukturen-der resultierenden Lösung. Für weitergehende Einzelheiten zum Begriff "Gelatine" kann verwiesen werden auf Römpp Chemielexikon, 10. Auflage, Georg Thieme Verlag Stuttgart/New York, Stichwort: "Gelatine", Seite 1484, sowie die hierin referierte Literatur, deren diesbezüglicher Inhalt hiermit durch Bezugnahme vollumfänglich eingeschlossen ist.

Was weiterhin die erfindungsgemäß eingesetzten Adsorberpartikel anbelangt, so können diese im Rahmen der vorliegenden Erfindung vielfältig ausgestaltet sein. Die Adsorberpartikel können dabei im Hinblick auf das jeweilige Einsatzgebiet der resultierenden adsorptiven Struktur sozusagen maßgeschneidert bzw. sehr spezifisch und zielgerichtet ausgewählt werden.

Üblicherweise ist es im Rahmen der vorliegenden Erfindung vorgesehen, dass die Adsorberpartikel eine innere poröse Struktur bzw. ein inneres Porensystem aufweisen. Auf diese Weise kann gewährleistet werden, dass die einzelnen Adsorberpartikel und damit auch die resultierende erfindungsgemäße adsorptive Struktur insgesamt eine hohe Adsorptionskapazität besitzen.

In diesem Zusammenhang ist es erfindungsgemäß vorgesehen, dass die Adsorberpartikel kornförmig, insbesondere kugelförmig, ausgebildet sind. Adsorberpartikel dieser Art zeichnen sich einerseits durch ihre gute Zugänglichkeit für die zu adsorbierenden Stoffe und ihre daraus resultierende verbesserte Adsorptionskapazität aus; andererseits sind sie aufgrund ihrer Geometrie bzw. ihrer geometrischen Form auch zur Umsetzung einer zweckgerichteten bzw. individuellen Formgebung der adsorptiven Strukturen hervorragend geeignet, da sie sich besonders gut aneinander fixieren lassen. Durch die Korn- bzw. Kugelform wird eine gleichmäßige bzw. homogene Packung und/oder Aneinanderlagerung der Adsorberpartikel ermöglicht. Zudem resultieren zwischen den entsprechenden Teilchen Hohlräume, durch welche das zu reinigende Medium strömen kann. Was die Teilchengröße der einzusetzenden Adsorberpartikel anbelangt, so kann diese in weiten Bereichen variieren. Im Rahmen der vorliegenden Erfindung ist es vorgesehen, dass die Adsorberpartikel Teilchendurchmesser (absolut) im Bereich von 0,001 bis 3 mm, insbesondere 0,005 bis 2,5 mm, vorzugsweise 0,01 bis 2 mm, besonders bevorzugt 0,02 bis 1,5 mm, ganz besonders bevorzugt 0,05 bis 1 mm, aufweisen. Insbesondere kann es erfindungsgemäß vorgesehen sein, dass die Adsorberpartikel mittlere Teilchengrößen, insbesondere mittlere Teilchendurchmesser (D50), im Bereich von 0,01 bis 2 mm, insbesondere 0,05 bis 1,5 mm, vorzugsweise 0,1 bis 1 mm, aufweisen.

Die entsprechenden Teilchengrößen bzw. -durchmesser können beispielsweise auf Basis der Methode nach ASTM D 2862-97/04 bestimmt werden. Zudem können die vorgenannten Größen mit weiteren Bestimmungsmethoden auf Basis von Siebanalyse, Röntgenbeugung, Laserdiffraktometrie oder dergleichen bestimmt werden. Die jeweiligen Bestimmungsmethoden sind dem Fachmann als solche wohlbekannt, so dass es diesbezüglich keiner weiteren Ausführungen bedarf.

Auch das Material, aus welchem die Adsorberpartikel bestehen bzw. gebildet sind, ist vielfältig auswählbar. Im Rahmen der vorliegenden Erfindung ist es jedoch bevorzugt, wenn das Material ausgewählt ist aus der Gruppe von Aktivkohle; Zeolithen; anorganischen Oxiden, insbesondere Siliciumdioxiden, Silicagelen und Aluminiumoxiden; Molekularsieben; mineralischen Granulaten; Klathraten; metallorganischen Gerüstmaterialien (MOFs) sowie deren Mischungen oder Kombinationen. Besonders bevorzugt bestehen die Adsorberpartikel jedoch aus Aktivkohle bzw. sind aus Aktivkohle gebildet.

In diesem Zusammenhang ist es erfindungsgemäß weiterhin bevorzugt, wenn die Adsorberpartikel aus kornförmiger bzw. Aktivkohlekörnern, insbesondere kugelförmiger Aktivkohle bzw. Aktivkohlekügelchen, gebildet sind.

Was die Stabilität der eingesetzten Adsorberpartikel anbelangt, so ist es erfindungsgemäß von Vorteil, wenn die Adsorberpartikel, insbesondere die Aktivkohlepartikel bzw. die Aktivkohle, vorzugsweise die Aktivkohlekörner oder Aktivkohlekügelchen, einen Berstdruck von mindestens 5 Newton, insbesondere einen Berstdruck im Bereich von 5 Newton bis 50 Newton, pro Partikel aufweisen.

Die nunmehr im Folgenden genannten Parameterangaben der Aktivkohle werden mit genormten oder explizit angegebenen Bestimmungsverfahren oder dem Fachmann an sich geläufigen Bestimmungsmethoden bestimmt. Diese Parameterangaben ergeben sich, sofern nachfolgend nicht anders angegeben ist, insbesondere aus den Stickstoffsorptionsisothermen der Aktivkohle.

Erfindungsgemäß kann es insbesondere vorgesehen sein, dass die Adsorberpartikel, insbesondere die Aktivkohlepartikel bzw. die Aktivkohle, eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweisen. In diesem Zusammenhang ist es insbesondere bevorzugt, wenn die Adsorberpartikel, insbesondere die Aktivkohlepartikel, eine spezifische Oberfläche (BET-Oberfläche) im Bereich von 500 bis 4.000 m²/g, insbesondere 750 bis 3.000 m²/g, vorzugsweise 900 bis 2.500 m²/g, besonders bevorzugt 950 bis 2.000 m²/g, aufweisen.

Die Bestimmung der spezifischen Oberfläche gemäß BET ist dem Fachmann grundsätzlich bekannt, so dass diesbezüglich keine weitergehenden Einzelheiten ausgeführt werden zu brauchen. Alle BET-Oberflächenangaben beziehen sich auf die Bestimmung gemäß der ASTM D 6556-04. Im Rahmen der vorliegenden Erfindung wird zur Bestimmung der BET-Oberfläche insbesondere die so genannte MultiPoint-BET-Bestimmungsmethode (MP-BET) in einem Partialdruckbereich p/p₀ von 0,05 bis 0,1 angewendet. In Bezug auf weitergehende Einzelheiten zur Bestimmung der BET-Oberfläche bzw. zu der BET-Methode kann auf die vorgenannte ASTM D 6556-04 sowie auf Römpp Chemielexikon, 10. Auflage, Georg Thieme Verlag, Stuttgart/New York, Stichwort: "BET-Methode", einschließlich der dort referierten Literatur und auf Winnacker-Küchler (3. Auflage), Band 7, Seiten 93 ff. sowie auf Z. Anal. Chem. 238, Seiten 187 bis 193 (1968), verwiesen werden.

Zudem kann es im Rahmen der vorliegenden Erfindung vorgesehen sein, dass die Adsorberpartikel, insbesondere die Aktivkohlepartikel bzw. die Aktivkohle, ein Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, aufweisen. Insbesondere kann es zudem vorgesehen sein, dass die Adsorberpartikel, insbesondere die Aktivkohlepartikel, ein Adsorptionsvolumen V_{ads} im Bereich von 250 bis 3.000 cm³/g, insbesondere 300 bis 2.000 cm³/g, vorzugsweise 350 bis 2.500 cm³/g, aufweisen.

Bei dem Adsorptionsvolumen V_{ads} handelt es sich um eine dem Fachmann wohlbekannte Größe zur Charakterisierung der eingesetzten partikulären Adsorptionsmaterialien. Auch die diesbezüglichen Bestimmungsmethoden sind dem Fachmann an sich wohlbekannt. Insbesondere handelt es sich bei dem Adsorptionsvolumen V_{ads} um das gewichtsbezogene adsorbierte N₂-Volumen, welches im Allgemeinen bei einem Partialdruck p/p₀ von 0,995 bestimmt wird.

Was das Gesamtporenvolumen nach Gurvich der eingesetzten Adsorberpartikel, insbesondere der Aktivkohlepartikel bzw. der Aktivkohle, anbelangt, so kann dieses mindestens von mindestens 0,30 cm³/g, insbesondere mindestens 0,50 cm³/g, vorzugsweise mindestens 0,55 cm³/g, bevorzugt mindestens 0,60 cm³/g, besonders bevorzugt mindestens 0,65 cm³/g, ganz besonders bevorzugt mindestens 0,70 cm³/g, betragen. Insbesondere weisen die Adsorberpartikel, insbesondere die Aktivkohlepartikel, ein Gesamtporenvolumen nach Gurvich im Bereich von 0,30 bis 2,0 cm³/g, insbesondere im Bereich von 0,50 bis 2,0 cm³/g, vorzugsweise im Bereich von 0,55 bis 1,5 cm³/g, bevorzugt im Bereich von 0,60 bis 1,2 cm³/g, besonders bevorzugt im Bereich von 0,65 bis 1,0 cm³/g, auf.

Was die Bestimmung des Gesamtporenvolumens nach Gurvich anbelangt, so handelt es sich um eine dem Fachmann auf diesem Gebiet an sich bekannte Mess- bzw. Bestimmungsmethode. Zu weitergehenden Einzelheiten bezüglich der Bestimmung des Gesamtporenvolumens nach Gurvich kann beispielsweise verwiesen werden auf L. Gurvich (1915), J. Phys. Chem. Soc. Russ. 47, 805, sowie auf S. Lowell et al., Characterization of Porous Solids and Powders: Surface Area Pore Size and Density, Kluwer Academic Publishers, Article Technologies Series, Seiten 111 ff.

Um eine besonders gute Adsorptionseffizienz der erfindungsgemäßen adsorptiven Strukturen zu ermöglichen, ist es im Rahmen der vorliegenden Erfindung weiterhin bevorzugt, wenn die Adsorberpartikel, insbesondere die Aktivkohlepartikel bzw. die Aktivkohle, eine Gesamtporosität im Bereich von 10 % bis 80 %, insbesondere 20 % bis 75 %, vorzugsweise 25 % bis 70 %, aufweisen.

Auch kann es vorgesehen sein, dass die Adsorberpartikel, insbesondere die Aktivkohlepartikel bzw. die Aktivkohle, ein spezifisches Gesamtporenvolumen im Bereich von 0,01 bis 4,0 cm³/g, insbesondere 0,1 bis 3,0 cm³/g, vorzugsweise 0,2 bis 2,0 cm³/g, aufweisen. In diesem Zusammenhang ist es insbesondere bevorzugt, wenn der Anteil an Poren mit Porendurchmessern ≤ 75 Å, insbesondere ≤ 50 Å, mindestens 65 %, insbesondere mindestens 70 %, vorzugsweise mindestens 75 %, beträgt. Gleichermaßen kann es erfindungsgemäß vorgesehen sein, dass der Anteil an Mikro- und Mesoporen mindestens 65 %, insbesondere mindestens 70 %, vorzugsweise mindestens 75 %, beträgt.

Im Rahmen der vorliegenden Erfindung bezeichnet der Begriff der Mikroporen solche Poren mit Porendurchmessern von weniger als 2 nm, wohingegen der Begriff der Mesoporen solche Poren mit Porendurchmessern im Bereich von 2 nm (d. h. 2 nm einschließlich) bis 50 nm einschließlich und der Begriff der Makroporen solche Poren mit Porendurchmessern von mehr als 50 nm (d. h. > 50 nm) bezeichnet.

Erfindungsgemäß ist es vorgesehen, dass die adsorptive Struktur das Hydrokolloid und die Adsorberpartikel, insbesondere die Aktivkohlepartikel bzw. die Aktivkohle, in einem massebezogenen Verhältnis von Hydrokolloid zu Adsorberpartikel "[Hydrokolloid : Adsorberpartikel]" im Bereich von [1 : 100] bis [1 : 1], insbesondere im Bereich von [1 : 80] bis [1 : 2], vorzugsweise im Bereich von [1 : 50] bis [1 : 5], bevorzugt im Bereich von [1 : 30] bis [1 : 10], besonders bevorzugt im Bereich von [1 : 25] bis [1 : 15], ganz besonders bevorzugt im Bereich von [1 : 22] bis [1 : 18], bezogen auf das jeweilige Trockengewicht, aufweist.

Durch die definierte und zielgerichtete Auswahl des Hydrokolloid/Adsorberpartikel-Verhältnisses wird - ohne sich hierbei auf diese Theorie festlegen oder beschränken zu wollen - gewährleistet, dass die Adsorberpartikel einerseits gut aneinander haften und somit ein stabiler Formkörper resultiert, andererseits aber die Adsorberpartikel für die zu adsorbierenden Stoffe dennoch gut zugänglich sind und die Adsorptionsleistung zumindest im Wesentlichen nicht nachteilig beeinflusst wird. Insbesondere ist gewährleistet, dass das Bindemittel nicht oder allenfalls nur in die Makroporen der eingesetzten Adsorberpartikel eindringt. Mikro- und Mesoporen hingegen, welche für eine gesteigerte Adsorptionseffizienz, insbesondere von Schad-, Gift- bzw. Geruchsstoffen, von besonderer Relevanz sind, bleiben zumindest im Wesentlichen frei von Bindemittel. Darüber hinaus trägt die zielgerichtete Auswahl dieses sehr speziellen Gewichtsverhältnisses dazu bei, in der resultierenden adsorptiven Struktur nach der Erfindung, insbesondere in dem adsorptiven Formkörper, ein gleichmäßiges und homogenes Porensystem zu erzeugen.

Was die eingesetzte Menge der Adsorberpartikel anbelangt, so kann diese ebenfalls in weiten Bereichen variieren. Im Rahmen der vorliegenden Erfindung ist es bevorzugt, wenn die adsorptive Struktur die Adsorberpartikel, insbesondere die Aktivkohlepartikel bzw. die Aktivkohle, in einer Menge von mindestens 70 Gew.-%, insbesondere von mindestens 80 Gew.-%, vorzugsweise von mindestens 75 Gew.-%, bevorzugt von mindestens 90 Gew.-%, besonders bevorzugt von mindestens 95 Gew.-%, bezogen auf das Gesamtgewicht der adsorptiven Struktur, aufweist. Insbesondere kann es vorgesehen sein, dass die adsorptive Struktur nach der Erfindung die Adsorberpartikel, insbesondere die Aktivkohlepartikel, in einer Menge im Bereich von 70 bis 99 Gew.-%, insbesondere im Bereich von 80 bis 98 Gew.-%, vorzugsweise im Bereich von 85 bis 97 Gew.-%, bevorzugt im Bereich von 90 bis 96 Gew.-%, besonders bevorzugt im Bereich von 92,5 bis 95 Gew.-%, bezogen auf das Gesamtgewicht der selbsttragenden Struktur, aufweist.

Was darüber hinaus das Hydrokolloid anbelangt, so kann dieses in variabler Menge eingesetzt werden. Im Rahmen der vorliegenden Erfindung ist es im Allgemeinen vorgesehen, dass die adsorptive Struktur das Hydrokolloid in einer Menge von höchstens 30 Gew.-%, insbesondere von höchstens 20 Gew.-%, vorzugsweise von höchstens 15 Gew.-%, besonders bevorzugt von höchstens 10 Gew.-%, ganz besonders bevorzugt jedoch von höchstens 5 Gew.-%, bezogen auf das Gesamtgewicht der adsorptiven Struktur, aufweist. In diesem Zusammenhang kann es insbesondere vorgesehen sein, dass die adsorptive Struktur das Hydrokolloid in einer Menge im Bereich von 0,1 bis 30 Gew.-%, insbesondere im Bereich von 1 bis 20 Gew.-%, vorzugsweise im Bereich von 2 bis 15 Gew.-%, besonders bevorzugt im Bereich von 3 bis 10 Gew.-%, ganz besonders bevorzugt im Bereich von 4 bis 7 Gew.-%, bezogen auf das Gesamtgewicht der adsorptiven Struktur, aufweist.

Hinsichtlich der weiteren Ausgestaltung der erfindungsgemäßen adsorptiven Struktur ist es erfindungsgemäß bevorzugt, wenn die Adsorberpartikel, insbesondere die Aktivkohlepartikel bzw. die Aktivkohle, mittels des Hydrokolloids dauerhaft bzw. irreversibel zu der adsorptiven Struktur verbunden sind. Die Begriffe "dauerhaft" bzw. "irreversibel" sind im Rahmen der vorliegenden Erfindung dahingehend zu verstehen, dass sich die Verbindung bzw. Fixierung bzw. Haftung der Adsorberpartikel zu der adsorptiven Struktur nach abgeschlossener Formgebung in der erfindungsgemäßen Struktur unter Normalbedingungen (1,013 bar und 22 °C) im Allgemeinen nicht mehr verändert und es sich somit sozusagen um einen "starren Körper" mit stabiler bzw. mechanisch belastbarer Struktur handelt.

Was die Ausgestaltung der adsorptiven Struktur nach der Erfindung weiterhin anbelangt, so ist es erfindungsgemäß bevorzugt, wenn die Adsorberpartikel, insbesondere die Aktivkohlepartikel bzw. die Aktivkohle, durch Benetzen mit dem Hydrokolloid in Kontakt gebracht sind. Dies ist im Rahmen der vorliegenden Erfindung insbesondere so zu verstehen, dass das Hydrokolloid zunächst in Lösung gebracht wird und anschließend die Aktivkohlepartikel mit der Hydrokolloid-Lösung in Kontakt gebracht werden, beispielsweise durch Einmischen bzw. Einbringen in die Lösung. Durch die anschließende Entfernung des Lösemittels werden die Adsorberpartikel unter Aushärtung mittels des Hydrokolloids miteinander verbunden bzw. aneinander fixiert, so dass Adsorberpartikel und Hydrokolloid in ihrer Gesamtheit sozusagen eine Matrix bzw. ein dreidimensionales Gerüst ausbilden.

Um eine gute Zugänglichkeit der Adsorberpartikel für zu adsorbierende Stoffe zu ermöglichen, ist es zudem bevorzugt, wenn die Oberfläche der einzelnen Adsorberpartikel, insbesondere der Aktivkohlepartikel bzw. der Aktivkohle, in der adsorptiven Struktur zu jeweils höchstens 50 %, insbesondere zu höchstens 40 %, bevorzugt zu höchstens 30 %, besonders bevorzugt zu höchstens 20 %, bezogen auf die Oberfläche des jeweiligen Adsorberpartikels, mit Hydrokolloid bedeckt und/oder belegt ist. Insbesondere kann es in diesem Zusammenhang vorgesehen sein, dass die Oberfläche der einzelnen Adsorberpartikel, insbesondere der Aktivkohlepartikel, der adsorptiven Struktur jeweils im Bereich von 1 bis 50 %, insbesondere im Bereich von 5 bis 40 %, bevorzugt im Bereich von 10 bis 30 %, bezogen auf die Oberfläche des jeweiligen Adsorberpartikels, mit Hydrokolloid bedeckt und/oder belegt ist, um in effizienter Weise die Adsorption von Gift-, Schad- bzw. Geruchsstoffen zu ermöglichen.

Im Rahmen der vorliegenden Erfindung ist es zudem vorgesehen, dass die adsorptive Struktur porös bzw. schaumartig bzw. in Form eines Schaums ausgebildet ist. Gleichermaßen ist es im Rahmen der vorliegenden Erfindung somit vorgesehen, dass die adsorptive Struktur ein Porensystem aufweist.

Was die adsorptive Struktur nach der Erfindung weiterhin anbelangt, so kann es insbesondere vorgesehen sein, dass diese ein offenporiges bzw. offenzelliges Porensystem oder ein geschlossenes bzw. geschlossenzelliges Porensystem, vorzugsweise ein offenporiges bzw. offenzelliges Porensystem, aufweist.

Unter einer porösen bzw. schaumartigen Struktur wird in diesem Zusammenhang erfindungsgemäß ein fester Schaum bzw. ein fester poröser Körper - d. h. insbesondere auf Basis einer Dispersion mit einem Feststoff als Dispersionsmedium und einem Gas als disperse Phase - verstanden. Als feste Schäume werden im Allgemeinen Gebilde aus gas-, insbesondere luftgefüllten kugel- oder polyederförmigen Poren bzw. Zellen definiert, welche durch feste Zellstege und/oder Lamellen begrenzt werden. Die Zellstege und/oder Lamellen auf Basis eines dem Schaum zugrundeliegenden Materials, welche sozusagen über Knotenpunkte verbunden sind, bilden dabei ein zusammenhängendes Gerüst aus. Mit anderen Worten entsteht durch die gas- bzw. luftgefüllten Zellen innerhalb der Zellstege und/oder Lamellen insgesamt eine poröse Struktur. Sind die Zellstege bzw. Lamellen nur unvollständig ausgebildet oder teilweise zerstört, entsteht ein offenzelliger und/oder offenporiger Schaum. Vorteilhaft an offenzelligen bzw. offenporigen Porensystemen ist insbesondere, dass diese für die zu reinigenden fluiden Medien besonders gut zugänglich sind und im Allgemeinen kaum Druckverluste auftreten. Für weitergehende Einzelheiten zum Begriff "Schaum" kann verwiesen werden auf Römpp, Chemielexikon, 10. Auflage, Georg Thieme Verlag, Stuttgart / New York, Stichwort: "Schaum", Seiten 3950 und 3951 sowie die darin referierte Literatur, deren diesbezüglicher gesamter Inhalt hiermit durch Bezugnahme vollumfänglich eingeschlossen ist.

Was das Porensystem der erfindungsgemäßen adsorptiven Struktur im Speziellen anbelangt, so ist dieses durch das mindestens eine Hydrokolloid und die Adsorberpartikel ausgebildet. Insbesondere kann es erfindungsgemäß vorgesehen sein, dass die Adsorberpartikel mittels des Hydrokolloids stegartig bzw. punktförmig miteinander verbunden bzw. aneinander fixiert sind, wobei die Oberfläche der Adsorberpartikel im Allgemeinen nur in geringem Maße mit Hydrokolloid bedeckt ist. Das Hydrokolloid kann dabei sozusagen einen "Verbindungssteg" zwischen einzelnen Adsorberpartikeln ausbilden, wobei es auch möglich ist, dass der "Verbindungssteg" als solcher mit weiteren Adsorberpartikeln verbunden bzw. ausgerüstet ist. Erfindungsgemäß weist das durch die Adsorberpartikel und das Hydrokolloid gebildete Porensystem luftgefüllte Hohlräume bzw. Poren auf. Um eine gute Durchströmbarkeit mit den zu reinigenden fluiden Medien zu ermöglichen, ist es erfindungsgemäß bevorzugt, wenn die luftgefüllten Hohlräume bzw. Poren miteinander verbunden sind bzw. miteinander in Kontakt stehen, wenn sie also - wie zuvor erwähnt - ein offenporiges bzw. offenzelliges Porensystem ausbilden.

Was die mittleren Porengrößen des Porensystems anbelangt, so sind diese variabel und können je nach Verwendungszweck der adsorptiven Struktur nach der Erfindung maßgeschneidert werden. In diesem Zusammenhang kann es erfindungsgemäß vorgesehen sein, dass das Verhältnis der mittleren Porengröße des Porensystems der adsorptiven Struktur zu der mittleren Teilchengröße der Adsorberpartikel [mittlere Porengröße des Porensystems : mittlere Teilchengröße der Adsorberpartikel] im Bereich von 0,01 : 1 bis 10.000 : 1, insbesondere 0,2 : 1 bis 1.000 : 1, vorzugsweise 0,5 : 1 bis 500 : 1, bevorzugt 1 : 1 bis 250 : 1, besonders bevorzugt 1,2 : 1 bis 200 : 1, ganz besonders bevorzugt 1,5 : 1 bis 100 : 1, liegt. Gleichermaßen kann es vorgesehen sein, dass das Verhältnis der mittleren Porengröße des Porensystems der adsorptiven Struktur zu der mittleren Teilchengröße der Adsorberpartikel [mittlere Porengröße des Porensystems : mittlere Teilchengröße der Adsorberpartikel] mindestens 0,1 : 1, insbesondere mindestens 0,5 : 1, vorzugsweise mindestens 1 : 1, bevorzugt mindestens 1,2 : 1, besonders bevorzugt mindestens 1,5 : 1, ganz besonders bevorzugt mindestens 2 : 1, noch mehr bevorzugt mindestens 3 : 1, beträgt.

Erfindungsgemäß kann die adsorptive Struktur nach der Erfindung zudem eine Porigkeit (Porosität) im Bereich von 2 bis 100 ppi (= pores per inch), insbesondere 5 bis 90 ppi, vorzugsweise 10 bis 80 ppi, bevorzugt 15 bis 75 ppi, aufweisen. Auf diese Weise wird eine Gasdurchlässigkeit bzw. Durchlässigkeit für Flüssigkeiten bei gleichzeitig guter Adsorptionsleistung gewährleistet.

Weiterhin ist es vorteilhaft, wenn die adsorptive Struktur nach der vorliegenden Erfindung Poren mit einem mittleren Porendurchmesser im Bereich von 0,001 bis 10 mm, insbesondere 0,01 bis 8 mm, vorzugsweise 0,05 bis 5 mm, bevorzugt 0,1 bis 3 mm, aufweist. Mit anderen Worten weist die adsorptive Struktur die Form eines Schaums bzw. porigen bzw. porösen Gerüsts auf, welcher bzw. welches insbesondere offene Zellen oder Poren mit stegartiger Begrenzung aufweist, wobei diese Begrenzung insbesondere durch den Verbund bzw. das Verbundmaterial aus Adsorberpartikeln und Hydrokolloid gebildet ist.

Die adsorptive Struktur nach der Erfindung ist äußerst vielfältig in ihrer Formbarkeit und kann, insbesondere durch Ausgießen, in nahezu jede erdenkliche geometrische Form und Größe gebracht werden bzw. in nahezu jeder geometrischen Form und Größe vorliegen.

In diesem Zusammenhang kann es im Rahmen der vorliegenden Erfindung vorgesehen sein, dass die adsorptive Struktur monolithisch bzw. einstückig ausgebildet ist.

So ist es beispielsweise möglich, dass die adsorptive Struktur zylindrisch, stabförmig, tellerförmig, quaderförmig, polyedrig, wabenförmig oder dergleichen ausgebildet ist. Im Speziellen ist es erfindungsgemäß zudem möglich, dass die adsorptive Struktur im Rahmen der Formgebung zusätzlich mit definierten Durchbrechungen bzw. Kanälen versehen ist. Dabei kommt es aufgrund der hervorragenden Eigenschaften der adsorptiven Strukturen nach der Erfindung zu keinen nachhaltigen Stabilitätsverlusten im Formkörper.

Gemäß einer alternativen Ausführungsform der vorliegenden Erfindung kann es jedoch auch vorgesehen sein, dass die adsorptive Struktur als Agglomerat (Bruchagglomerat) vorliegt. In diesem Zusammenhang ist es insbesondere bevorzugt, wenn ein einzelnes Agglomerat jeweils mindestens 5 Adsorberpartikel, insbesondere mindestens 10 Adsorberpartikel, vorzugsweise mindestens 15 Adsorberpartikel, bevorzugt mindestens 20 Adsorberpartikel oder mehr, umfasst. Gleichermaßen kann es vorgesehen sein, dass ein einzelnes Agglomerat jeweils bis zu 50 Adsorberpartikel, insbesondere bis zu 75 Adsorberpartikel, vorzugsweise bis zu 100 Adsorberpartikel, umfasst.

Die erfindungsgemäßen Bruchagglomerate weisen im Allgemeinen deutlich weniger Adsorberpartikel auf als die zuvor beschriebenen Ausführungsformen auf Basis der monolithischen Formkörper und besitzen im Vergleich hierzu zudem im Allgemeinen eine deutlich geringere Größe. Was die Mikrostruktur bzw. den grundsätzlichen Aufbau anbelangt, so unterscheiden sich beide Ausführungsformen jedoch nicht voneinander, da solche Agglomerate insbesondere durch Brechen bzw. Mörsern größerer monolithischer bzw. einstückiger adsorptiver Strukturen bzw. adsorptiver Formkörper erhalten werden. In diesem Zusammenhang war es vollkommen überraschend, dass durch den alleinigen Einsatz des Hydrokolloids als Bindemittel zur Fixierung bzw. Verbindung der Adsorberpartikel die resultierenden Agglomerate auch nach dem Brechen bzw. Mörsern noch eine ausreichende Stabilität bei gleichzeitig guter Adsorptionsleistung besitzen. Erfindungsgemäß eignet sich eine Vielzahl solcher Agglomerate besonders zur Verwendung als Filtermaterial in Form einer losen Schüttung.

Insbesondere besitzen die erfindungsgemäßen adsorptiven Strukturen hervorragende Adsorptionseigenschaften, welche nachfolgend beschrieben sind:
Die adsorptive Struktur, insbesondere eine Vielzahl adsorptiver Strukturen in loser Schüttung oder als monolithischer Formkörper, besitzen insbesondere einen längenbezogenen Druckverlust bei einer Strömungsgeschwindigkeit von 0,2 m/sec von höchstens 150 Pa/cm, vorzugsweise höchstens 100 Pa/cm, bevorzugt höchstens 90 Pa/cm, besonders bevorzugt höchstens 70 Pa/cm, ganz besonders bevorzugt höchstens 50 Pa/cm. Insbesondere kann es vorgesehen sein, dass die adsorptive Struktur, insbesondere eine Vielzahl adsorptiver Strukturen in loser Schüttung oder als monolithischer Formkörper, einen längenbezogenen Druckverlust bei einer Strömungsgeschwindigkeit im Bereich von 10 bis 1.000 Pa/cm, insbesondere im Bereich von 25 bis 500 Pa/cm, vorzugsweise im Bereich von 30 bis 250 Pa/cm, besonders bevorzugt im Bereich von 40 bis 200 Pa/cm, aufweisen.

Was die Butanadsorption der adsorptiven Struktur nach der vorliegenden Erfindung anbelangt, so sollte diese mindestens 20 %, insbesondere mindestens 25 %, vorzugsweise mindestens 30 %, betragen. Insbesondere kann die Butanadsorption der adsorptiven Struktur im Bereich von 20 bis 80 %, insbesondere im Bereich von 25 bis 70 %, vorzugsweise im Bereich von 30 bis 65 %, liegen.

Auch was die Resistenz gegenüber physikalischen und chemischen Einflüssen anbelangt, so weist die adsorptive Struktur nach der vorliegenden Erfindung hervorragende Eigenschaften auf. Üblicherweise besitzt die adsorptive Struktur eine Temperaturbeständigkeit von mindestens 100 °C, insbesondere mindestens 130 °C, vorzugsweise mindestens 180 °C, besonders bevorzugt mindestens 200 °C. Auch ist die adsorptive Struktur nach der Erfindung zumindest im Wesentlichen unlöslich in organischen, insbesondere aprotischen Lösemitteln, insbesondere Aceton.

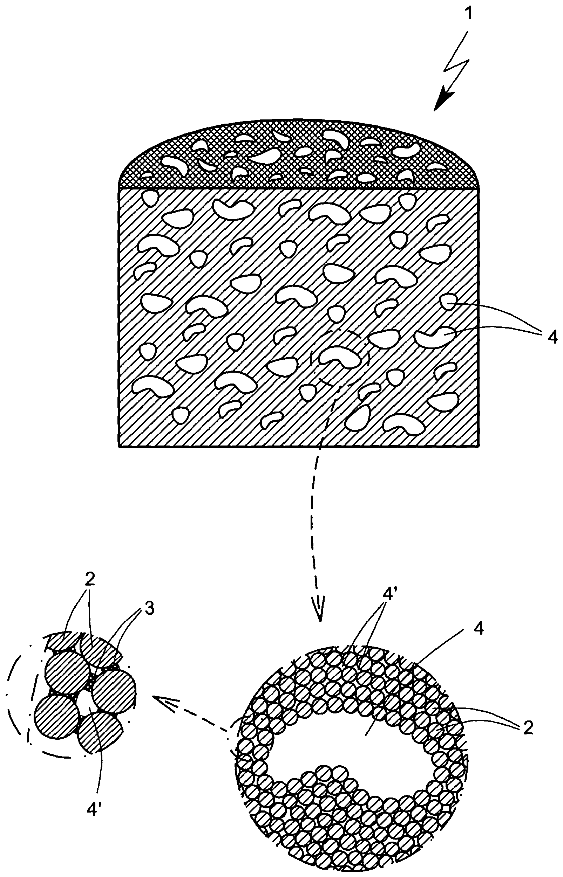

Weitere vorteilhafte Eigenschaften, Aspekte und Merkmale der vorliegenden Erfindung ergeben sich aus der folgenden Beschreibung des in der einzigen Figur dargestellten Ausführungsbeispiels. Es zeigt:
Fig. eine schematische Darstellung einer erfindungsgemäßen adsorptiven Struktur auf Basis von Adsorberpartikeln im Querschnitt sowie zwei Ausschnittsvergrößerungen der Querschnitte des Porensystems der adsorptiven Struktur.

Die einzige Figur zeigt eine schematische Darstellung des Querschnitts einer monolithischen zylinderförmigen adsorptiven Struktur 1 nach der Erfindung auf Basis von mittels eines Hydrokolloids 3 aneinander zum Haften gebrachten Adsorberpartikeln 2 entsprechend einer speziellen Ausgestaltung der vorliegenden Erfindung. Die einzige Figur zeigt den schaumartigen bzw. porösen Aufbau der adsorptiven Struktur 1, wobei diese ein vorzugsweise offenes Porensystem mit zahlreichen Poren 4 aufweist, wobei die Poren 4 im Allgemeinen signifikant größer sind als die hieran angepassten Adsorberpartikel 2. Eine erste Ausschnittsvergrößerung zeigt eine solche Pore 4 sowie deren Umgebung im Detail. Die Pore 4 ist durch eine Vielzahl einzelner Adsorberpartikel 2 begrenzt. Die Adsorberpartikel 2 sind durch das Hydrokolloid 3 aneinander fixiert bzw. miteinander verbunden, wobei Adsorberpartikel 2 und Hydrokolloid 3 sozusagen eine Matrix bzw. ein Gerüst ausbilden, welches ein weiteres Porensystem aufweist, welches gleichermaßen insbesondere offenporig ausgebildet ist und im Allgemeinen kleinere Poren 4' aufweist, welche insgesamt durch die unmittelbar mittels des Hydrokolloids 3 aneinandergelagerten Adsorberpartikel 2 gebildet sind. Die zweite Ausschnittsvergrößerung zeigt den Aufbau des engporigeren Porensystems auf Basis der Pore 4'. Die einzelnen Adsorberpartikel 2 sind insbesondere punktförmig über Hydrokolloid-Stege 3 dauerhaft bzw. irreversibel zu der adsorptiven Struktur 1 verbunden, wobei die Oberfläche der Adsorberpartikel 2 vorzugsweise zu höchstens 20 % mit Hydrokolloid bedeckt ist.

Die vorstehenden Ausführungen zeigen, dass es im Rahmen der vorliegenden Erfindung erstmals gelungen ist, selbsttragende dreidimensionale adsorptive Strukturen auf Basis einer Vielzahl von Adsorberpartikeln bereitzustellen, welche durch den zweckgerichteten erfindungsgemäßen Einsatz eines Hydrokolloids als Bindemittel gute mechanische Stabilität und hervorragende Adsorptionseigenschaften sowie eine variable bzw. zweckgerichtete Formbarkeit in nahezu jede erdenkliche geometrische Form und Größe aufweisen.

Weiterer Gegenstand der vorliegenden Erfindung ist - gemäß einem **zweiten** Aspekt der vorliegenden Erfindung - ein Verfahren zur Herstellung einer selbsttragenden dreidimensionalen adsorptiven Struktur, insbesondere eines adsorptiven Formkörpers, wie zuvor definiert, wobei das Verfahren die folgenden Schritte in der nachstehend spezifizierten Abfolge (a) bis (c) umfasst:
(a) Herstellung einer Lösung und/oder Dispersion mindestens eines Hydrokolloids, ausgewählt aus der Gruppe von Gelatine, Kollagen, Xanthan, Dextran, Agar, Carrageen, Pektin, Gummi arabicum, Galactomannan sowie deren Mischungen oder Kombinationen;
(b) Inkontaktbringen der in Schritt (a) hergestellten Lösung und/oder Dispersion mit einer Vielzahl von einzelnen kornförmigen Adsorberpartikeln mit absoluten Teilchendurchmessern im Bereich von 0,001 bis 3 mm zum Erhalt einer Suspension der Adsorberpartikel in der Lösung und/oder Dispersion des Hydrokolloids, wobei die Adsorberpartikel in einem massebezogenen Verhältnis von Hydrokolloid zu Adsorberpartikel "[Hydrokolloid : Adsorberpartikel]" im Bereich von [1 : 100] bis [1 : 1], bezogen auf das jeweilige Trockengewicht, eingesetzt werden und
   wobei durch Freisetzung von Gasen aus den Adsorberpartikeln und/oder durch Einbringen von Gasen eine Volumenexpansion und/oder Ausbildung eines Schaums und/oder einer porösen Struktur in der Suspension erfolgt, wobei die Volumenexpansion und/oder die Ausbildung einer porösen Struktur durch Eintrag von Scherkräften und Einstellen der Suspension auf Temperaturen im Bereich von 50 bis 150 °C gesteuert wird;
(c) Entfernung des Lösungs- und/oder Dispersionsmediums aus der Suspension und Aushärtung zum Erhalt der selbsttragenden dreidimensionalen adsorptiven Struktur.

Mit anderen Worten ist somit Gegenstand der Erfindung ein Verfahren zur Herstellung einer selbsttragenden dreidimensionalen adsorptiven Struktur, insbesondere eines adsorptiven Formkörpers, insbesondere wie zuvor definiert, wobei eine Vielzahl einzelner Adsorberpartikel in einer Lösung und/oder Dispersion mindestens eines Hydrokolloids in Suspension gebracht wird und nachfolgend das Lösungs- und/oder Dispersionsmedium aus der Suspension zum Erhalt der selbsttragenden dreidimensionalen adsorptiven Struktur entfernt wird.

Im Rahmen der vorliegenden Erfindung hat sich in vollkommen überraschender Weise gezeigt, dass sich mittels des erfindungsgemäßen Verfahrens selbsttragende dreidimensionale Strukturen mit adsorptiven Eigenschaften erhalten lassen, welche die zuvor beschriebenen positiven Eigenschaften aufweisen.

Die Einzelheiten und Besonderheiten des erfindungsgemäßen Verfahrens sind nunmehr im Folgenden ausführlich geschildert:
Was die Durchführung von Verfahrensschritt (a) bzw. die Bereitstellung der Lösung und/oder Dispersion des Hydrokolloids anbelangt, so hat es sich als besonders vorteilhaft erwiesen, wenn das Lösemittel zum Erhalt der Lösung bzw. Dispersion des mindestens einen Hydrokolloids ausgewählt wird aus der Gruppe von wässrigen und organischen Lösemitteln sowie deren Mischungen oder Kombinationen, insbesondere aus der Gruppe von Wasser, Ethylenglycol, Glycerin, Formamid und Essigsäure sowie deren Mischungen oder Kombinationen. Vorzugsweise wird jedoch Wasser als Lösemittel eingesetzt.

Hinsichtlich der Menge des zur Bereitstellung der Lösung und/oder Dispersion des eingesetzten Hydrokolloids und/oder des in Verfahrensschritt (a) eingesetzten Hydrokolloids, so kann diese erfindungsgemäß derart ausgewählt werden, dass einerseits eine gute Stabilität des resultierenden Formkörpers gewährleistet ist, andererseits die Adsorptionseigenschaften dennoch nicht beeinträchtigt werden und möglichst geringe Anteile der Oberfläche der Adsorberpartikel mit Hydrokolloid bedeckt sind. In diesem Zusammenhang hat es sich als besonders vorteilhaft erwiesen, wenn zur Bereitstellung der Lösung und/oder Dispersion des Hydrokolloids und/oder in Verfahrensschritt (a) das mindestens eine Hydrokolloid in einer Menge im Bereich von 0,1 bis 30 Gew.-%, insbesondere im Bereich von 0,5 bis 15 Gew.-%, vorzugsweise im Bereich von 1 bis 10 Gew.-%, bevorzugt im Bereich von 2 bis 8 Gew.-%, bezogen auf das Lösemittel und/oder die Dispersion, eingesetzt wird.

Die Bereitstellung der Lösung und/oder Dispersion des Hydrokolloids und/oder Verfahrensschritt (a) kann unter Erwärmen auf Temperaturen im Bereich von 40 bis 120 °C, insbesondere im Bereich von 50 bis 110 °C, vorzugsweise im Bereich von 60 bis 100 °C, bevorzugt im Bereich von 70 bis 90 °C, durchgeführt werden. Darüber hinaus hat es sich als vorteilhaft erwiesen, wenn bei der Bereitstellung der Lösung und/oder Dispersion des Hydrokolloids und/oder in Verfahrensschritt (a) unter Eintrag von Scherkräften, insbesondere unter Rühren, verfahren wird. Auf diese Weise wird eine gleichmäßige Lösung bzw. Dispersion des Hydrokolloids in dem jeweiligen Lösemittel erzielt, was sich in den resultierenden Produkten in der Ausbildung eines besonders homogenen Porensystems in dem erfindungsgemäßen Schaum niederschlägt.

Die im Rahmen der Bereitstellung der Lösung und/oder Dispersion eines Hydrokolloids und/oder von Verfahrensschritt (a) hergestellte Lösung bzw. Dispersion kann - insbesondere wie nachfolgend erläutert - zur Bereitstellung einer Suspension von Adsorberpartikeln eingesetzt werden, um auf dieser Basis nachfolgend den erfindungsgemäßen adsorptiven Formkörper zu erhalten.

Was die erfindungsgemäß eingesetzte Menge an Adsorberpartikeln anbelangt, so ist es im Rahmen der vorliegenden Erfindung vorgesehen, dass bei der Bereitstellung der Suspension einer Vielzahl einzelner Adsorberpartikel in der Lösung und/oder Dispersion des Hydrokolloids und/oder dass in Verfahrensschritt (b) die Adsorberpartikel in einem massebezogenen Verhältnis von Hydrokolloid zu Adsorberpartikel "[Hydrokolloid : Adsorberpartikel]" im Bereich von [1 : 100] bis [1 : 1], insbesondere im Bereich von [1 : 80] bis [1 : 2], vorzugsweise im Bereich von [1 : 50] bis [1 : 5], bevorzugt im Bereich von [1 : 30] bis [1 : 10], besonders bevorzugt im Bereich von [1 : 25] bis [1 : 15], ganz besonders bevorzugt im Bereich von [1 : 22] bis [1 : 18], bezogen auf das jeweilige Trockengewicht, eingesetzt werden. Überraschenderweise hat sich in diesem Zusammenhang gezeigt, dass durch die gezielte Einstellung eines definierten Verhältnisses von Hydrokolloid zu Adsorberpartikeln den erfindungsgemäßen adsorptiven Strukturen eine besonders gute Stabilität sowie ein homogenes Porensystem verliehen werden kann.

Was die Bereitstellung der Suspension einer Vielzahl einzelner Adsorberpartikel in einer Lösung und/oder Dispersion des Hydrokolloids und/oder Verfahrensschritt (b) weiterhin anbelangt, so kann es erfindungsgemäß vorgesehen sein, dass durch das Inkontaktbringen der bereitgestellten und/oder in Schritt (a) hergestellten Lösung und/oder Dispersion des mindestens einen Hydrokolloids mit der Vielzahl von einzelnen Adsorberpartikeln zum Erhalt der Suspension der Adsorberpartikel der Anteil des Lösemittels in der Suspension auf einen Bereich von 20 bis 90 Gew.-%, insbesondere auf einen Bereich von 25 bis 80 Gew.-%, vorzugsweise auf einen Bereich von 30 bis 70 Gew.-%, bevorzugt auf einen Bereich von 35 bis 60 Gew.-%, bezogen auf die Suspension, eingestellt wird. Durch den definierten Anteil des Lösemittels in Relation zu Adsorberpartikeln und Hydrokolloid kann erfindungsgemäß ein besonders homogenes Porensystem in der adsorptiven Struktur erzeugt werden, was wiederum das Strömungsverhalten der zu reinigenden fluiden Medien innerhalb des Formkörpers verbessert.

Darüber hinaus ist es im Rahmen der vorliegenden Erfindung vorgesehen, dass bei der Bereitstellung einer Suspension einer Vielzahl einzelner Adsorberpartikel in einer Lösung und/oder Dispersion des Hydrokolloids bzw. in Verfahrensschritt (b) durch Freisetzung von Gasen aus den Adsorberpartikeln und/oder durch Einbringen von Gasen eine Volumenexpansion und/oder Ausbildung eines Schaums und/oder einer porösen Struktur in der Suspension erfolgt.

In diesem Zusammenhang erfolgt - ohne sich auf diese Theorie beschränken zu wollen - die Schaumbildung sozusagen dadurch, dass in der Suspension von Adsorberpartikel in einer Lösung und/oder Dispersion des Hydrokolloids gas- bzw. luftgefüllten Hohlräume entstehen, durch welche sozusagen ein Porensystem in der Suspension ausgebildet wird.

In diesem Zusammenhang ist die Ausbildung eines Schaums und/oder einer porösen Struktur auch dahingehend zu verstehen, dass durch das Austreten bzw. Einbringen von Gasen, insbesondere Luft, in die Suspension gasgefüllte Zellen entstehen, welche durch flüssige Zellstege auf Basis von Hydrokolloid und dem Lösemittel sowie die Adsorberpartikel begrenzt werden. Es handelt sich hierbei also zunächst insbesondere um einen flüssigen bzw. viskosen Schaum, d. h. eine Dispersion einer Flüssigkeit als disperse Phase, in welcher sowohl die festen Adsorberpartikel als auch das Gas, insbesondere die Luft, vorzugsweise dispergiert vorliegen. Es wird sozusagen ein System ausgebildet, welches Adsorberpartikel, Hydrokolloid und luftgefüllte Hohlräume umfasst, wobei die luftgefüllten Hohlräume durch Adsorberpartikel und Hydrokolloid begrenzt werden und nach der Aushärtung gewissermaßen das Porensystem in der erfindungsgemäßem adsorptiven Struktur in Form eines festen Schaums ausbilden. Für weitergehende Einzelheiten zum Begriff "Schaum" sowie "Schaumbildung" kann verwiesen werden auf Römpp, Chemielexikon, 10. Auflage, Georg Thieme Verlag, Stuttgart/New York, Stichwort: "Schaum", Seiten 3950 und 3951, sowie die darin referierte Literatur, deren diesbezüglicher Inhalt hiermit durch Bezugnahme vollumfänglich eingeschlossen ist.

Im Rahmen der vorliegenden Erfindung ist es vorgesehen, dass die Bereitstellung der Suspension einer Vielzahl einzelner Adsorberpartikel in einer Lösung und/oder Dispersion des Hydrokolloids und/oder dass in Verfahrensschritt (b) die Volumenexpansion und/oder die Ausbildung einer porösen und/oder schaumartigen Struktur unter Eintrag von Scherkräften, insbesondere unter Rühren, durchgeführt wird. Auf diese Art und Weise wird eine gleichmäßige bzw. homogene Verteilung der Adsorberpartikel in der Suspension ermöglicht. Erfindungsgemäß ist es darüber hinaus vorgesehen, dass bei der Bereitstellung der Suspension einer Vielzahl einzelner Adsorberpartikel in einer Lösung und/oder Dispersion des Hydrokolloids und/oder dass in Verfahrensschritt (b) ein Einstellen der Suspension auf Temperaturen im Bereich von 50 bis 150 °C, insbesondere im Bereich von 60 bis 140 °C, vorzugsweise im Bereich von 70 bis 130°C, bevorzugt im Bereich von 80 bis 120 °C, besonders bevorzugt im Bereich von 90 bis 110 °C, erfolgt. Hierdurch kann die Ausbildung gleichmäßiger und homogener poröser Strukturen bzw. Schäume verbessert werden.

Darüber hinaus ist es möglich, durch die Dauer des Eintrags von Scherkräften, insbesondere des Rührens, der Suspension die Porosität der resultierenden adsorptiven Strukturen weiter einzustellen. In diesem Zusammenhang hat es sich als besonders vorteilhaft erwiesen, wenn bei der Bereitstellung der Suspension einer Vielzahl einzelner Adsorberpartikel in einer Lösung und/oder Dispersion des Hydrokolloids und/oder in Verfahrensschritt (b) der Eintrag von Scherkräften, insbesondere das Rühren, der Suspension über einen Zeitraum im Bereich von 5 bis 180 s, insbesondere im Bereich von 10 bis 150 s, vorzugsweise im Bereich von 15 bis 120 s, bevorzugt im Bereich von 20 bis 100 s, erfolgt. Die von der Anmelderin durchgeführten Studien haben dabei gezeigt, dass mit Zunahme der Rührdauern im angegebenen Bereich das Porensystem in der resultierenden adsorptiven Struktur sowohl engporiger als auch homogener wird. Kurze Rührdauern hingegen resultieren im Allgemeinen in adsorptiven Strukturen mit einem großporigen Porensystem.

Je nach Einsatzgebiet kann das erzeugte Porensystem mittels des erfindungsgemäßen Verfahrens, insbesondere auf Basis der zuvor beschriebenen Maßnahmen, sozusagen maßgeschneidert werden.

Nach Abschluss der Bereitstellung der Suspension einer Vielzahl einzelner Adsorberpartikel in einer Lösung und/oder Dispersion des Hydrokolloids und/oder von Verfahrensschritt (b) erfolgt im Allgemeinen die Entfernung des Lösungs- und/oder Dispersionsmediums zum Erhalt der erfindungsgemäßen selbsttragenden dreidimensionalen adsorptiven Struktur.

Erfindungsgemäß kann es diesbezüglich insbesondere vorgesehen sein, dass die Entfernung des Lösungs- und/oder Dispersionsmediums und/oder dass Verfahrensschritt (c) unter Ausbildung einer porösen und/oder schaumartigen Struktur erfolgt. In diesem Zusammenhang ist unter einer porösen bzw. schaumartigen Struktur insbesondere eine Dispersion auf Basis eines Feststoffs als Dispersionsmedium und eines Gases als disperse Phase zu verstehen. Hierbei werden - ohne sich hierbei auf diese Theorie beschränken zu wollen - gasförmige Bläschen bzw. Poren - resultierend aus dem in der Suspension von Adsorberpartikeln zurückbehaltenen bzw. eingetragenen Gas - von festen Zelllamellen bzw. Stegen - nämlich den Adsorberpartikeln und dem Hydrokolloid - eingeschlossen.

Was die Entfernung des Lösungs- und/oder Dispersionsmediums und/oder was Verfahrensschritt (c) weiterhin anbelangt, so ist es besonders bevorzugt, wenn unter Erwärmen und/oder Einstellung der Suspension auf Temperaturen im Bereich von 70 bis 200 °C, insbesondere im Bereich von 90 bis 180 °C, vorzugsweise im Bereich von 100 bis 160 °C, besonders bevorzugt im Bereich von 110 bis 150 °C, verfahren wird. Die Entfernung des Lösungs- und/oder Dispersionsmediums und/oder Verfahrensschritt (c) kann im Allgemeinen unter Erwärmen und/oder Einstellung der Suspension auf Temperaturen von mindestens 70 °C, insbesondere mindestens 90 °C, vorzugsweise mindestens 110 °C, besonders bevorzugt mindestens 130 °C, durchgeführt werden. Im Rahmen des erfindungsgemäßen Verfahrens ist es in diesem Zusammenhang auch möglich, insbesondere die Homogenität der Porenverteilung sowie die Porenvolumina durch Einstellung der Temperatur während der Entfernung des Lösungs- und/oder Dispersionsmedium weiter zu steuern. Im Rahmen der durchgeführten Studien hat sich nämlich ergeben, dass durch höhere Temperaturen im Allgemeinen auch größere Poren bzw. Porenvolumina erzeugt werden können, während geringere Temperaturen im Allgemeinen zu geringeren Porengrößen führen.

Zudem ist es im Rahmen der vorliegenden Erfindung möglich, dass die Entfernung des Lösungs- und/oder Dispersionsmediums und/oder dass Verfahrensschritt (c) unter gegebenenfalls weiterer Volumenexpansion und/oder unter gegebenenfalls weiterer Ausbildung eines Schaums und/oder einer porösen Struktur, insbesondere durch Einbringen von Gasen, in der Suspension durchgeführt wird.

Als besonders vorteilhaft hat es sich im Rahmen der vorliegenden Erfindung zudem erwiesen, wenn die Entfernung des Lösungs- und/oder Dispersionsmediums und/oder wenn Verfahrensschritt (c) unter Formgebung und/oder Ausbildung der selbsttragenden dreidimensionalen adsorptiven Struktur durchgeführt wird. Was die Formgebung bzw. Ausbildung der erfindungsgemäßen Struktur anbelangt, so kann dies insbesondere durch Ausgießen in eine entsprechende (Guss- bzw. Gieß-)Form erfolgen. Mittels des erfindungsgemäßen Verfahrens ist es überraschenderweise möglich, die adsorptiven Strukturen nach der Erfindung, insbesondere die adsorptiven Formkörper, in nahezu jede erdenkliche geometrische Form und Größe zu bringen, ohne dass hierunter Adsorptionsleistung oder Stabilität leiden. Darüber hinaus ist es auch möglich, die Formkörper mit Durchbrechungen, welche den Formkörper vollständig durchziehen, auszustatten, ohne dass es zum Stabilitätsverlust kommt, insbesondere auf Basis der Auswahl spezieller Formen.

Was das erfindungsgemäße Verfahren weiterhin anbelangt, so kann es insbesondere vorgesehen sein, dass die Entfernung des Lösungs- und/oder Dispersionsmediums und/oder dass Verfahrensschritt (c), insbesondere zur Aushärtung der Suspension, über einen Zeitraum im Bereich von 2 bis 22 Stunden, insbesondere im Bereich von 4 bis 20 Stunden, vorzugsweise im Bereich von 8 bis 18 Stunden, bevorzugt im Bereich von 10 bis 14 Stunden, durchgeführt wird. Wie zuvor beschrieben, führt das erfindungsgemäße Verfahren zu selbsttragenden dreidimensionalen adsorptiven Strukturen nach der Erfindung, insbesondere adsorptiven Formkörpern, welche gegenüber den entsprechenden Materialien des Standes der Technik signifikant verbesserte Eigenschaften aufweisen. Insbesondere ist das erfindungsgemäße Verfahren als solches äußerst gut zu handhaben. Darüber hinaus betrifft die vorliegende Erfindung auch eine selbsttragende Struktur mit adsorptiven Eigenschaften, welche durch das zuvor beschriebene Verfahren erhältlich ist.

Im Rahmen der vorliegenden Erfindung ist es somit vorgesehen, mindestens ein Hydrokolloid zur Verbindung bzw. Fixierung bzw. zum Aneinanderhaften von einzelnen Adsorberpartikeln zum Erhalt einer selbsttragenden dreidimensionalen adsorptiven Struktur, insbesondere eines adsorptiven Formkörpers, zu verwenden bzw. einen Hydrokolloid, um einzelne Adsorberpartikel miteinander zu verbinden und/oder aneinander zu fixieren und/oder aneinander zum Haften zu bringen, zu verwenden, wobei insbesondere eine selbsttragende dreidimensionale adsorptive Struktur erhalten wird, insbesondere wie sie bereits zuvor definiert wurde.

Darüber hinaus ermöglichen die erfindungsgemäßen selbsttragenden dreidimensionalen adsorptiven Strukturen ein breites Anwendungsspektrum.

Weiterer Gegenstand der vorliegenden Erfindung ist daher - gemäß einem **dritten** Aspekt der vorliegenden Erfindung - die Verwendung einer selbsttragenden dreidimensionalen adsorptiven Struktur, wie sie zuvor definiert wurde, für die Adsorption von Giftstoffen, Schadstoffen und Gerüchen, insbesondere aus Gas- oder Luftströmen oder aber aus Flüssigkeiten, insbesondere Wasser, bzw. zur Reinigung oder Aufbereitung von Gasen, Gasströmen oder Gasgemischen, insbesondere Luft, oder von Flüssigkeiten, insbesondere Wasser.

Weiterhin kann es im Rahmen der vorliegenden Erfindung vorgesehen sein, eine selbsttragende dreidimensionale adsorptive Struktur, wie sie zuvor beschrieben wurde, in Adsorptionsfiltern bzw. zur Herstellung von Filtern, insbesondere Adsorptionsfiltern, und/oder als Substrat bzw. Träger(-material) insbesondere für Katalysatoren und/oder katalytische Systeme und/oder reaktive Verbindungen zu verwenden.

Zudem ist Gegenstand der vorliegenden Erfindung - gemäß einem **vierten** Aspekt der vorliegenden Erfindung - ein Filter, welches eine selbsttragende dreidimensionale adsorptive Struktur, wie sie zuvor definiert wurde, umfasst.

Was das erfindungsgemäße Filter weiterhin anbelangt, so kann es insbesondere vorgesehen sein, dass dieses einen längenbezogenen Druckverlust bei einer Strömungsgeschwindigkeit von 0,2 m/s von höchstens 150 Pa/cm, vorzugsweise höchstens 100 Pa/cm, bevorzugt höchstens 90 Pa/cm, besonders bevorzugt höchstens 70 Pa/cm, ganz besonders bevorzugt höchstens 50 Pa/cm, aufweist. Zudem hat es sich als vorteilhaft erwiesen, wenn das erfindungsgemäße Filter einen längenbezogenen Druckverlust bei einer Strömungsgeschwindigkeit von 0,2 m/s im Bereich von 5 bis 150 Pa/cm, vorzugsweise im Bereich von 5 bis 100 Pa/cm, bevorzugt im Bereich von 7,5 bis 90 Pa/cm, besonders bevorzugt im Bereich von 10 bis 80 Pa/cm, aufweist.

Im Rahmen der vorliegenden Erfindung ist es somit erstmals gelungen, selbsttragende dreidimensionale adsorptive Strukturen, insbesondere adsorptive Formkörper, bereitzustellen, welche bei individueller und insbesondere zweckgerichteter Formbarkeit gleichzeitig eine hohe Stabilität und hervorragende Adsorptionseigenschaften aufweisen. Derartige Materialien, welche alle vorgenannten Eigenschaften vereinen, sind im Stand der Technik bislang noch nicht hergestellt bzw. bereitgestellt worden.

Weitere Ausgestaltungen, Abwandlungen und Variationen der vorliegenden Erfindung sind für den Fachmann beim Lesen der Beschreibung ohne Weiteres erkennbar und realisierbar, ohne dass er dabei den Rahmen der vorliegenden Erfindung verlässt.

Die vorliegende Erfindung wird anhand der nachfolgenden Ausfiihrungsbeispiele veranschaulicht, welche die vorliegende Erfindung jedoch keinesfalls beschränken sollen.

### AUSFÜHRUNGSBEISPIELE:

Nachfolgend wird die Herstellung erfindungsgemäßer selbsttragender dreidimensionaler adsorptiver Strukturen als monolithische Formkörper einerseits sowie als Bruchagglomerat andererseits beschrieben.

Zur Herstellung der erfindungsgemäßen Strukturen werden kugelförmige Adsorberpartikel auf Basis von Aktivkohle als Adsorberpartikel (z. B. erhältlich von der Firma Blücher GmbH, Erkrath, Deutschland, oder von der Firma Adsor-Tech GmbH, Premnitz, Deutschland) verwendet.

### 1. Herstellung erfindungsgemäßer Formkörper und Bruchagglomerate

### Herstellung von erfindungsgemäßen Formkörpern

Die Herstellung erfindungsgemäßer Formkörper erfolgte dadurch, dass zunächst 1 g Gelatinegranulat als Hydrokolloid unter Erwärmen auf 80 °C und Rühren in 25 ml destilliertem Wasser gelöst wurde. Dem dabei entstehenden Gel wurden 20 g der Adsorberpartikel in Form von kugelförmiger Aktivkohle hinzugefügt. Der Lösemittelgehalt betrug etwa 54 Gew.-%, bezogen auf das Gesamtgewicht der hergestellten Suspension. Das Verhältnis [Hydrokolloid : Adsorberpartikel] betrug 1 : 20. Beim Hinzufügen der Adsorberpartikel zu dem Gel trat die in den Poren der Aktivkohle vorliegende Luft teilweise insbesondere durch temperaturinduzierte Volumenexpansion und Verdrängung von Wasser aus, was zu einer Verdoppelung des Volumens der Suspension führte. Anschließend wurde durch weitere Erwärmung auf eine Temperatur von 100 °C und Rühren über einen Zeitraum von 40 Sekunden das Volumen der Gel-Adsorberpartikel-Masse auf circa 40 % des Maximalvolumens eingestellt, um eine mittlere Porengrößenverteilung des restlichen Formkörpers zu erzeugen. Nachfolgend wurde die Masse zur Formgebung in eine Form eingefüllt. Anschließend erfolgte die Aushärtung im Trockenschrank bei einer Temperatur von 130 °C über einen Zeitraum von 12 Stunden. Es resultierten Formkörper mit einem gleichmäßig verteilten Porensystem mit mittleren Porengrößen.

Im Zusammenhang mit der Herstellung adsorptiver Formkörper wurden zudem Testreihen durchgeführt, bei welchen die folgenden Parameter variiert wurden:
- Verhältnis [Hydrokolloid : Adsorberpartikel]
- Menge des Lösemittels
- Rührdauer
- Aushärtungstemperatur

### Verhältnis [Hydrokolloid : Adsorberpartikel]

Neben dem oben beschriebenen Verhältnis [Hydrokolloid : Adsorberpartikel] von 1 : 20 wurden zudem [Hydrokolloid : Adsorberpartikel]-Verhältnisse von 1 : 5, 1 : 10, 1 : 25 und 1 : 30 getestet. Die übrigen Parameter (Menge des Lösemittels, Rührdauer, Aushärtungstemperatur) wurden wie oben beschrieben konstant gehalten.

In diesem Zusammenhang hat sich gezeigt, dass Formkörper, welche [Hydrokolloid : Adsorberpartikel]-Verhältnisse von 1 : 5 und 1 : 10 aufweisen, in ihren Adsorptionseigenschaften durch den hohen Gelanteil leicht beeinträchtigt sind, da die Adsorberpartikel geringfügig schlechter zugänglich sind, da eine leicht erhöhte Bedeckung mit dem Hydrokolloid vorliegt. Insgesamt sind die Adsorptionsleistungen bei Einsatz der vorgenannten Verhältnisse dennoch als zufriedenstellend zu bewerten. Formkörper mit [Hydrokolloid : Adsorberpartikel]-Verhältnissen von 1 : 25 bzw. 1 : 30 hingegen sind aufgrund der sehr geringen Menge an Hydrokolloid als "Klebstoff" geringfügig instabiler. Für die typischen Einsatzgebiete solcher Formkörper zur Aufreinigung fluider wie gasförmiger Medien ist die Stabilität aber noch zufriedenstellend. Der mechanisch stabilste Formkörper, bei dem dennoch die Oberfläche der Adsorberpartikel nur minimal mit Hydrokolloid bedeckt ist, konnte unter Einsatz eines [Hydrokolloid : Adsorberpartikel]-Verhältnisses von 1 : 20 erzeugt werden.

### Menge des Lösemittels

Zur Untersuchung des Einflusses der eingesetzten Menge des Lösemittels auf die Eigenschaften der erfindungsgemäßen Formkörper wurden Lösemittelanteile von 25 Gew.-%, 35 Gew.-%, 50 Gew.-%, 60 Gew.-% und 75 Gew.-%, bezogen auf die Suspension von Hydrokolloid, Adsorberpartikeln und Lösemittel, eingesetzt. Die übrigen Parameter (Verhältnis [Hydrokolloid : Adsorberpartikel], Rührdauer, Aushärtungstemperatur) wurden wie oben beschrieben konstant gehalten.

Dabei zeigte sich, dass der Einsatz von Lösemittelanteilen von weniger als 25 Gew.-% zu einer leicht beeinträchtigten Verteilung des Hydrokolloids führt. Lösemittelanteile von mehr als 60 Gew.-% hingegen führen zu weniger gut verteilten und inhomogenen Porensystemen. Insbesondere im Inneren des Formkörpers entstehen etwas größere Poren, wohingegen die Poren in den äußeren Bereichen geringere Durchmesser aufweisen. Die besten Ergebnisse werden somit bei Einsatz von Lösemittelanteilen von 35 Gew.-% bis 60 Gew.-% erzielt. Dennoch lassen auch bei Einsatz geringerer oder größerer Mengen bzw. Anteile des Lösemittels Formkörper bereitstellen, welche insgesamt zufriedenstellende Eigenschaften besitzen.

### Rührdauer

Zur Untersuchung des Einflusses der Rührdauer auf das Porensystem der Formkörper wurden Rührdauern im Bereich von 10 bis 150 s eingesetzt. Die übrigen Parameter (Verhältnis [Hydrokolloid : Adsorberpartikel], Menge des Lösemittels, Aushärtungstemperatur) wurden wie oben beschrieben konstant gehalten.

Hierbei hat sich gezeigt, dass mit steigender Rührdauer engporigere bis geschlossene Porensysteme erzeugt werden können. Für Ansätze mit einem Gesamtgewicht der Suspension von Hydrokolloid, Lösemittel und Adsorberpartikeln von 46 g konnte bei einer Rührdauer von 37 bis 40 Sekunden ein offenzelliges Porensystem mit einer mittleren Porengrößenverteilung erzeugt werden. Kurze Rührdauern hingegen führen zu größeren Poren in der adsorptiven Struktur. Somit ist es möglich, die Porengrößenverteilung bzw. die Porosität der adsorptiven Struktur gezielt zu steuern, indem die Rührdauern entsprechend angepasst werden.

### Aushärtungstemperatur

Zur Untersuchung des Einflusses der Aushärtungstemperatur auf das Porensystem der Formkörper wurden Temperaturen von 60 °C, 70 °C, 85 °C, 100 °C, 110 °C, 130 °C und 150 °C bei Aushärtungsdauern von 2 Stunden eingesetzt. Die übrigen Parameter (d. h. Verhältnis [Hydrokolloid : Adsorberpartikel], Menge des Lösemittels, Rührdauer) wurden wie oben beschrieben konstant gehalten.

In diesem Zusammenhang hat sich gezeigt, dass Temperaturen unterhalb von 110 °C zu größeren Höhlräumen an der Deckschicht als am Boden der Formkörper führen und somit ein teilweise inhomogenes Porensystem erzeugt wird. Eine Aushärtungstemperatur von 130 °C führt zu einem besonders homogenen und gleichmäßigen Porensystem in den resultierenden Formkörpern. Darüber hinaus ist es möglich, durch des Einsatz von Temperaturen von mehr als 130° C bei gleichzeitig kürzeren Aushärtungsdauern größere Porenvolumina zu erzeugen.

### Herstellung von erfindungsgemäßen Bruchagglomeraten

Für die Erzeugung von Bruchagglomeraten wurden 4 g Gelatinegranulat als Hydrokolloid in 100 ml destilliertem Wasser bei einer Temperatur von 80 °C unter stetigem Rühren gelöst. Dem resultierenden Gel wurden 80 g Adsorbenz zugefügt, so dass das [Hydrokolloid : Adsorberpartikel]-Verhältnis 1 : 20 betrug. Infolge der eintretenden Gasentwicklung wurde das Volumen der Suspension auf Basis von Hydrokolloid, Adsorberpartikeln und Lösemittel verdoppelt. Durch weitere Erwärmung der Suspension auf 100 °C und stetiges Rühren wurde das Volumen eingeengt, bis eine zähflüssige Masse entstand, welche anschließend zur Aushärtung in eine Schale überführt wurde. Die Aushärtung erfolgte bei 130 °C in einem Trockenschrank. Nach der Abkühlung erfolgte zunächst eine grobe Zerkleinerung mit dem Mörser, anschließend eine feine Zerkleinerung im Sieb. Durch Absiebung wurden die erhaltenen Bruchagglomerate fraktioniert bzw. klassiert. Für nachfolgend noch beschriebene Analysen wurden die Bruchagglomeratfraktionen I, II und III zurückbehalten, wobei die Agglomerate von Fraktion I eine Größe von 0,6 bis 1,0 mm, die von Fraktion II eine Größe von 0,8 bis 1,25 mm und die von Fraktion III eine Größe von 1,25 bis 2,5 mm hatten.

### Herstellung von Vergleichsformkörpern und Vergleichsbruchagglomeraten

Zu Vergleichszwecken wurden zudem nichterfindungsgemäße Formkörper und Vergleichsbruchagglomerate auf Basis von Aktivkohle einerseits sowie einem thermoplastischen Schmelzklebstoff als Haftvermittler bzw. Bindemittel andererseits hergestellt.

Dazu wurde ein thermoplastischer Schmelzklebstoff bei Temperaturen im Bereich von 150 bis 180 °C auf kornförmige Aktivkohlepartikel aufgesprüht. Die mit Haftvermittler besprühten Aktivkohlepartikel wurden zur Aushärtung zum Erhalt eines zylindrischen Formkörpers in eine dementsprechende Form überführt. Auch hierbei wurde zunächst ein [Schmelzklebstoff : Adsorberpartikel]-Verhältnis von 1 : 20 eingesetzt. Die auf diese Weise erzeugten Formkörper waren jedoch auch ohne äußerliche Einwirkung von Druck äußerst instabil. Weiterhin wurden Formkörper mit einem [Schmelzklebstoff : Adsorberpartikel]-Verhältnis von 3 : 7 und 4 : 6 hergestellt. Auch bei einem Verhältnis von 3 : 7 waren die Formkörper äußerst instabil und bei Raumtemperatur deformierbar. Erst ab einem [Schmelzklebstoff : Adsorberpartikel]-Verhältnis von 4 : 6 konnte eine Stabilität erzielt werden, welche überhaupt einen Einsatz des Formkörpers zur Aufreinigung fluider wie gasförmiger Medien ermöglichen würde. Dennoch war die mechanische Stabilität solcher Vergleichsformkörper signifikant geringer als diejenige der erfindungsgemäßen Formkörper. Darüber hinaus wurden analog zu den erfindungsgemäßen Bruchagglomeraten - ausgehend von dem Vergleichsformkörper mit einem [Schmelzklebstoff: Adsorberpartikel]-Verhältnis von 4 : 6 - durch Mörsern und anschließendes feineres Zerkleinern mit Hilfe eines Siebs Vergleichsbruchagglomerate erzeugt. Auch diese waren im Vergleich zu den erfindungsgemäßen Bruchagglomeraten deutlich instabiler.

Darüber hinaus wurden die Vergleichsformkörper und -bruchagglomerate zum anschließenden Vergleich mit den erfindungsgemäßen Formkörpern und Bruchagglomeraten technisch analysiert. In diesem Zusammenhang wurde ihre Resistenz gegenüber (Luft-)Feuchtigkeit und organischen Lösungsmitteln untersucht. Zudem wurde ihre Temperaturbeständigkeit ermittelt.

Was die Temperaturbeständigkeit der Vergleichsformkörper und -bruchagglomerate anbelangt, so war diese unzureichend. Bei Temperaturen von 170 °C war bereits eine starke Zersetzung zu beobachten. Auch die Resistenz gegenüber organischen Lösungsmitteln, insbesondere gegenüber Aceton, war nicht zufriedenstellend, da der eingesetzte Schmelzklebstoff von den Lösungsmitteln angegriffen wurde. Die Resistenz gegenüber Luftfeuchtigkeit hingegen war weitgehend zufriedenstellend.

### 2. Technische Analyse der erfindungsgemäßen Formkörper und Bruchagglomerate

Sowohl die erfindungsgemäßen Strukturen in Form von Formkörpern als auch in Form von Bruchagglomeraten wurden hinsichtlich ihrer Adsorptionsleistung untersucht. Weiterhin wurden Analysen durchgeführt, um die Resistenz der adsorptiven Strukturen gegenüber chemisch-physikalischen Einflüssen zu testen.

### Resistenz gegenüber (Luft-)Feuchtigkeit

Zur Charakterisierung der Resistenz gegenüber (Luft-)Feuchtigkeit wurden sowohl die Bruchagglomerate als auch die Formkörper über einen Zeitraum von 94 Stunden bei einer Luftfeuchte von 80 % und einer Temperatur von 65 °C in einem Klimaschrank gelagert. Die Formkörper zeigten sich hierbei formbeständig, und das Porensystem blieb trotz der hohen Luftfeuchtigkeit bei gleichzeitig verhältnismäßig hohen Temperaturen, welche die Löslichkeit von Gelatine bei Kontakt mit Wasser beschleunigen, intakt. Die Formkörper zeigten nach Lagerung im Klimaschrank lediglich eine geringfügige Deformation unter Einfluss von Druck. Auch bei den Bruchagglomeraten konnte kein Zerfall bzw. keine Zersetzung beobachtet werden.

### Resistenz gegenüber Aceton

Weiterhin wurden die Formkörper und Bruchagglomerate hinsichtlich ihrer Löslichkeit in Aceton untersucht. Hierzu wurden sowohl Formkörper als auch Bruchagglomerate über einen Zeitraum von 2 Stunden in Aceton getaucht und anschließend an der Luft getrocknet. In diesem Zusammenhang konnte weder eine Zersetzung noch eine Deformation unter Druck bei den Formkörpern bzw. Agglomeraten beobachtet werden.

### Temperaturbeständigkeit

Auch hinsichtlich der Resistenz gegenüber hohen Temperaturen zeigten die erfindungsgemäßen Strukturen hervorragende Eigenschaften. Sowohl Formkörper als auch Bruchagglomerate waren bei Temperaturen von 200 °C stabil und begannen erst ab Temperaturen von mindestens 250 bis 300 °C sich zu zersetzen.

### 3. Analyse der Adsorptionsleistung von erfindungsgemäßen und zu Vergleichszwecken hergestellten Formkörpern und Bruchagglomeraten

Zur Bestimmung der Adsorptionsleistung wurde die Butanadsorption von den erfindungsgemäßen Formkörpern sowie den Vergleichsformkörpern bestimmt. Alle getesteten Formkörper waren zylinderförmig und wiesen eine Zylinderhöhe von 20 mm sowie einen Zylinderdurchmesser von 50 mm auf. Der erfindungsgemäße Formkörper wies ein [Hydrokolloid: Adsorberpartikel]-Verhältnis von 1 20 auf. Der Vergleichsformkörper besaß ein [Schmelzklebstoff : Adsorberpartikel]-Verhältnis von 4 : 6. Die [Haftmittel : Adsorberpartikel]-Verhältnisse der jeweils in loser Schüttung getesteten Bruchagglomerate waren äquivalent zu denen der Formkörper. Die Schütthöhe betrug jeweils 20 mm und der Durchmesser der Schüttung 50 mm.

Die den Formkörpern bzw. Bruchagglomeraten zugrundeliegenden Basisadsorbenzien, d. h. die eingesetzten kornförmigen Aktivkohlepartikel, wiesen eine Butanadsorption bzw. Adsorptionsleistung von 32,7 Gew.-% auf. Mit den erfindungsgemäßen Bruchagglomeraten konnte eine Adsorptionsleistung von 31,6 Gew.-% erzielt werden. Die Adsorptionsleistung der erfindungsgemäßen Formkörper lag bei 30,4 Gew.-%. Diese Ergebnisse bestätigen, dass bei Einsatz eines Hydrokolloids als Haftmittel bzw. Bindemittel die Adsorptionsleistung der Basisadsorbenzien zumindest im Wesentlichen nicht beeinträchtigt wird. Bei den Vergleichsformkörpern hingegen betrug die Adsorptionsleistung nur 11,0 Gew.-%, was als klares Indiz für eine Beeinträchtigung der Adsorptionsleistung durch den eingesetzten Haftvermittler zu werten ist. Auch bei den Vergleichsbruchagglomeraten war ein ähnlicher Abfall der Adsorptionsleistung gegenüber den erfindungsgemäßen Bruchagglomeraten zu beobachten; sie betrug hier nur 12,3 Gew.-%.

Darüber hinaus wurden die erfindungsgemäßen zylindrischen Formkörper sowie die Agglomerate der Fraktionen I, II und III, welche sich in ihrer Größe voneinander unterscheiden, hinsichtlich der Druckverluste und Anfangsdurchbrüche in Bezug auf Cyclohexan als zu adsorbierende Substanz untersucht. Die diesbezüglichen Ergebnisse sind in Tabelle 1 aufgeführt.

**Tabelle 1: Bestimmung von Druckverlusten und Anfangsdurchbrüchen der erfindungsgemäßen Formkörper und Bruchagglomerate**

| **Probe** | **Agglomerat I** | **Agglomerat II** | **Agglomerat III** | **Zylindrischer Formkörper** |
|---|---|---|---|---|
| Agglomeratgröße [mm] | 0,6 - 1,0 | 0,8 - 1,25 | 1,25 - 2,5 | - |
| Schütthöhe [mm] | 20,0 | 20,0 | 20,0 | 20,0 (Zylinderhöhe) |
| Durchm. Schüttung [mm] | 50,0 | 50,0 | 50,0 | 50,0 (Zylinderdurchmesser) |
| Gewicht Schüttung [g] | 17,9 | 16,1 | 12,9 | - |
| Schüttdichte [g/cm³] | 0,5 | 0,4 | 0,3 | - |
| Toluol-Konzentration [ppm] | 79,4 | 79,8 | 79,3 | 79,5 |
| Temperatur [°C] | 23,0 | 23,2 | 23,2 | 23,0 |
| rel. Feuchte [%] | 49,9 | 49,9 | 49,9 | 49,9 |
| Anströmgeschw. (Sollwert) [m/s] | 0,1 | 0,1 | 0,1 | 0,1 |
| Druckverlust [Pa] | 21,8 | 19,3 | 15,1 | 23,2 |
| Durchbr. [%] / Zeit [min] | | | | |
| 1 | 0,0 | 0,0 | 0,0 | 0,0 |
| 5 | 0,0 | 0,0 | 0,0 | 0,0 |
| 10 | 0,0 | 0,0 | 0,0 | 0,0 |
| 30 | 0,1 | 0,1 | 0,1 | 0,0 |
| 60 | 0,1 | 0,1 | 0,1 | 0,0 |
| 120 | 0,1 | 0,1 | 0,1 | 0,0 |
| 180 | 0,1 | 0,1 | 0,1 | 0,1 |
| 240 | 0,1 | 0,1 | 0,1 | 0,1 |
| 360 | 0,1 | 0,1 | 0,1 | 0,1 |
| 600 | 0,1 | 0,1 | 0,2 | 0,1 |
| 900 | 0,3 | 0,4 | 1,0 | 0,2 |
| 1.200 | 0,9 | 1,2 | 3,8 | 0,3 |
| Zeit [min] bis Durchbruch [%] | | | | |
| 5 | 1.649,3 | 1.344,0 | 1.100,5 | 1.948,2 |
| 10 | 1.715,7 | 1.385,1 | 1.172,3 | 2.053,4 |
| 30 | 1.799,3 | 1.460,7 | 1.286,3 | 2.258,1 |

Die in Tabelle 1 dargestellten Ergebnisse zeigen, dass bei den erfindungsgemäßen Strukturen Druckverluste von maximal 23,2 Pa auftreten. Die Druckverluste bei Agglomeraten in loser Schüttung sind noch etwas geringer als bei den Formkörpern, da der Formkörper eine höhere Dichte besitzt. Auch die Durchbruchseigenschaften der erfindungsgemäßen Formkörper und Agglomerate sind hervorragend. Was den Anfangsdurchbruch anbelangt, so besitzt der Formkörper gegenüber den Agglomeraten leicht verbesserte Eigenschaften. Dennoch sind auch die Zeiten bis zum Anfangsdurchbruch bei den Agglomeraten in loser Schüttung hervorragend und nur geringfügig kürzer als bei den Formkörpern.

Die vorstehenden Ausführungen zeigen, dass sich die erfindungsgemäßen Strukturen - sowohl die Formkörper als auch die Bruchagglomerate - insbesondere durch eine hervorragende Adsorptionsleistung, geringe Druckverluste und Anfangsdurchbrüche auszeichnen. Ohne sich hierbei auf diese Theorie beschränken zu wollen, sind die hervorragenden Eigenschaften der erfindungsgemäßen adsorptiven Strukturen damit zu begründen, dass bereits äußerst geringe Mengen des Hydrokolloids zur Erzeugung von Formkörpern auf Basis von partikulären Adsorbentien ausreichend sind, so dass zum einen eine hohe Adsorptionsleistung und zum anderen eine sehr gute Zugänglichkeit der Adsorptionspartikel vorliegt. Darüber hinaus zeichnen sich die erfindungsgemäßen Strukturen durch ihre hervorragende mechanische Stabilität unter mechanischer Einwirkung aus. Insbesondere die gute Stabilität ermöglicht auch, dass eine variable Formgebung, wie z. B. die Herstellung von Wabenkörpern mit Porenkanälen von bis zu 10 mm oder mehr, möglich ist. Darüber hinaus besitzen die erfindungsgemäßen Strukturen eine hervorragende Resistenz gegenüber chemisch-physikalischen Einflüssen sowie eine gute Beständigkeit unter Normalbedingungen. Aufgrund der Beständigkeit gegenüber Flüssigkeiten ist es sogar möglich, die erfindungsgemäßen Strukturen in einfacher Art und Weise mit Wasser zu reinigen. Insgesamt besitzen die erfindungsgemäßen Strukturen hervorragende Eigenschaften, wie sie zuvor noch nicht realisiert werden konnten.

## Patentansprüche

1. Selbsttragende dreidimensionale adsorptive Struktur, insbesondere adsorptiver Formkörper, wobei die adsorptive Struktur eine Vielzahl von einzelnen Adsorberpartikeln umfasst,
wobei die einzelnen Adsorberpartikel mittels mindestens eines Hydrokolloids zu einer selbsttragenden dreidimensionalen adsorptiven Struktur, insbesondere einem adsorptiven Formkörper, verbunden sind und/oder wobei die einzelnen Adsorberpartikel mittels mindestens eines Hydrokolloids miteinander verbunden und/oder aneinander fixiert und/oder aneinander zum Haften gebracht sind,
wobei das Hydrokolloid ausgewählt ist aus der Gruppe von Gelatine, Kollagen, Xanthan, Dextran, Agar, Carrageen, Pektin, Gummi arabicum, Galactomannan sowie deren Mischungen oder Kombinationen,
wobei die Adsorberpartikel kornförmig ausgebildet sind und absolute Teilchendurchmesser im Bereich von 0,001 bis 3 mm aufweisen,
wobei die adsorptive Struktur das Hydrokolloid und die Adsorberpartikel in einem massebezogenen Verhältnis von Hydrokolloid zu Adsorberpartikel "[Hydrokolloid : Adsorberpartikel]" im Bereich von [1:100] bis [1:1], bezogen auf das jeweilige Trockengewicht, aufweist und
wobei die adsorptive Struktur porös und/oder schaumartig ausgebildet ist und wobei die adsorptive Struktur ein Porensystem aufweist.

2. Adsorptive Struktur nach Anspruch 1,
wobei das Hydrokolloid ein Makromolekül ist und/oder eine Vielzahl von Makromolekülen aufweist, insbesondere wobei das Makromolekül und/oder das Hydrokolloid eine mittlere Molmasse, insbesondere eine gewichtsmittlere Molmasse, im Bereich von 5.000 bis 500.000 g/mol, insbesondere im Bereich von 10.000 bis 400.000 g/mol, vorzugsweise im Bereich von 12.500 bis 300.000 g/mol, bevorzugt im Bereich von 15.000 bis 250.000 g/mol, aufweist; und/oder
wobei das Hydrokolloid Gelatine und/oder Kollagen, insbesondere Gelatine, ist.

3. Adsorptive Struktur nach einem der vorangehenden Ansprüche,
wobei die Adsorberpartikel eine innere poröse Struktur und/oder ein inneres Porensystem aufweisen, und/oder wobei die Adsorberpartikel aus Aktivkohle bestehen und/oder wobei die Adsorberpartikel aus Aktivkohle gebildet sind; und/oder
wobei die Adsorberpartikel kugelförmig ausgebildet sind; und/oder
wobei die Adsorberpartikel absolute Teilchendurchmesser im Bereich von 0,005 bis 2,5 mm, vorzugsweise im Bereich von 0,01 bis 2 mm, besonders bevorzugt im Bereich von 0,02 bis 1,5 mm, ganz besonders bevorzugt im Bereich von 0,05 bis 1 mm, aufweisen und/oder wobei die Adsorberpartikel mittlere Teilchendurchmesser (D50) im Bereich von 0,01 bis 2 mm, insbesondere im Bereich von 0,05 bis 1,5 mm, vorzugsweise im Bereich von 0,1 bis 1 mm, aufweisen; und/oder
wobei die Adsorberpartikel aus einem Material bestehen, welches ausgewählt ist aus der Gruppe von Aktivkohle; Zeolithen; anorganischen Oxiden, insbesondere Siliciumdioxiden, Silicagelen und Aluminiumoxiden; Molekularsieben; mineralischen Granulaten; Klathraten; metallorganischen Gerüstmaterialien (MOFs) sowie deren Mischungen oder Kombinationen, besonders bevorzugt Aktivkohle, und/oder wobei die Adsorberpartikel aus Aktivkohle bestehen und/oder wobei die Adsorberpartikel aus Aktivkohle gebildet sind; und/oder
wobei die Adsorberpartikel aus kornförmiger, insbesondere kugelförmiger Aktivkohle gebildet sind.

4. Adsorptive Struktur nach einem der vorangehenden Ansprüche,
wobei die Adsorberpartikel, insbesondere die Aktivkohlepartikel, eine spezifische Oberfläche (BET-Oberfläche) von mindestens 500 m²/g, insbesondere mindestens 750 m²/g, vorzugsweise mindestens 1.000 m²/g, besonders bevorzugt mindestens 1.200 m²/g, aufweisen und/oder wobei die Adsorberpartikel, insbesondere die Aktivkohlepartikel, eine spezifische Oberfläche (BET-Oberfläche) im Bereich von 500 bis 4.000 m²/g, insbesondere im Bereich von 750 bis 3.000 m²/g, vorzugsweise im Bereich von 900 bis 2.500 m²/g, besonders bevorzugt im Bereich von 950 bis 2.000 m²/g, aufweisen; und/oder
wobei die Adsorberpartikel, insbesondere die Aktivkohlepartikel, ein Adsorptionsvolumen V_{ads} von mindestens 250 cm³/g, insbesondere mindestens 300 cm³/g, vorzugsweise mindestens 350 cm³/g, besonders bevorzugt mindestens 400 cm³/g, aufweisen und/oder wobei die Adsorberpartikel, insbesondere die Aktivkohlepartikel, ein Adsorptionsvolumen V_{ads} im Bereich von 250 bis 3.000 cm³/g, insbesondere im Bereich von 300 bis 2.000 cm³/g, vorzugsweise im Bereich von 350 bis 2.500 cm³/g, aufweisen; und/oder
wobei die Adsorberpartikel, insbesondere die Aktivkohlepartikel, ein Gesamtporenvolumen nach Gurvich von mindestens 0,30 cm³/g, insbesondere mindestens 0,50 cm³/g, vorzugsweise mindestens 0,55 cm³/g, bevorzugt mindestens 0,60 cm³/g, besonders bevorzugt mindestens 0,65 cm³/g, ganz besonders bevorzugt mindestens 0,70 cm³/g, aufweisen und/oder wobei die Adsorberpartikel, insbesondere die Aktivkohlepartikel, ein Gesamtporenvolumen nach Gurvich im Bereich von 0,30 bis 2,0 cm³/g, insbesondere im Bereich von 0,50 bis 2,0 cm³/g, vorzugsweise im Bereich von 0,55 bis 1,5 cm³/g, bevorzugt im Bereich von 0,60 bis 1,2 cm³/g, besonders bevorzugt im Bereich von 0,65 bis 1,0 cm³/g, aufweisen; und/oder
wobei die Adsorberpartikel, insbesondere die Aktivkohlepartikel, eine Gesamtporosität im Bereich von 10% bis 80 %, insbesondere 20 % bis 75%, vorzugsweise 25% bis 70 %, aufweisen; und/oder
wobei die Adsorberpartikel, insbesondere die Aktivkohlepartikel, ein spezifisches Gesamtporenvolumen im Bereich von 0,01 bis 4,0 cm³/g, insbesondere im Bereich von 0,1 bis 3,0 cm³/g, vorzugsweise im Bereich von 0,2 bis 2,0 cm³/g, aufweisen, insbesondere wobei der Anteil an Poren mit Porendurchmessern ≤ 75 A, insbesondere ≤ 50 Å, mindestens 65 %, insbesondere mindestens 70 %, vorzugsweise mindestens 75 %, beträgt und/oder insbesondere wobei der Anteil an Mikro- und Mesoporen mindestens 65 %, insbesondere mindestens 70 %, vorzugsweise mindestens 75 %, beträgt.

5. Adsorptive Struktur nach einem der vorangehenden Ansprüche,
wobei die adsorptive Struktur das Hydrokolloid und die Adsorberpartikel, insbesondere die Aktivkohlepartikel, in einem massebezogenen Verhältnis von Hydrokolloid zu Adsorberpartikel "[Hydrokolloid : Adsorberpartikel]" im Bereich von [1 : 80] bis [1 : 2], vorzugsweise im Bereich von [1 : 50] bis [1 : 5], bevorzugt im Bereich von [1 : 30] bis [1 : 10], besonders bevorzugt im Bereich von [1:25] bis [1 : 15], ganz besonders bevorzugt im Bereich von [1 : 22] bis [1 : 18], bezogen auf das jeweilige Trockengewicht, aufweist; und/oder
wobei die adsorptive Struktur die Adsorberpartikel, insbesondere die Aktivkohlepartikel, in einer Menge von mindestens 70 Gew.-%, insbesondere von mindestens 80 Gew.-%, vorzugsweise von mindestens 75 Gew.-%, bevorzugt von mindestens 90 Gew.-%, besonders bevorzugt von mindestens 95 Gew.-%, bezogen auf das Gesamtgewicht der selbsttragenden Struktur, aufweist und/oder wobei die adsorptive Struktur die Adsorberpartikel, insbesondere die Aktivkohlepartikel, in einer Menge im Bereich von 70 bis 99 Gew.-%, insbesondere im Bereich von 80 bis 98 Gew.-%, vorzugsweise im Bereich von 85 bis 97 Gew.-%, bevorzugt im Bereich von 90 bis 96 Gew.-%, besonders bevorzugt im Bereich von 92,5 bis 95 Gew.-%, bezogen auf das Gesamtgewicht der selbsttragenden Struktur, aufweist; und/oder
wobei die adsorptive Struktur das Hydrokolloid in einer Menge von höchstens 30 Gew.-%, insbesondere von höchstens 20 Gew.-%, vorzugsweise von höchstens 15 Gew.-%, besonders bevorzugt von höchstens 10 Gew.-%, ganz besonders bevorzugt von höchstens 5 Gew.-%, bezogen auf das Gesamtgewicht der adsorptiven Struktur, aufweist und/oder wobei die adsorptive Struktur das Hydrokolloid in einer Menge im Bereich von 0,1 bis 30 Gew.-%, insbesondere im Bereich von 1 bis 20 Gew.-%, vorzugsweise im Bereich von 2 bis 15 Gew.-%, besonders bevorzugt im Bereich von 3 bis 10 Gew.-%, ganz besonders bevorzugt im Bereich von 4 bis 7 Gew.-%, bezogen auf das Gesamtgewicht der adsorptiven Struktur, aufweist.

6. Adsorptive Struktur nach einem der vorangehenden Ansprüche,
wobei die Adsorberpartikel, insbesondere die Aktivkohlepartikel, durch Benetzen mit dem Hydrokolloid in Kontakt gebracht sind und/oder wobei die Adsorberpartikel und das Hydrokolloid in ihrer Gesamtheit ein Gerüst und/oder eine Matrix des Hydrokolloids ausbilden; und/oder
wobei die adsorptive Struktur ein offenporiges und/oder offenzelliges Porensystem und/oder -gerüst oder ein geschlossenes und/oder geschlossenzelliges Porensystem und/oder -gerüst, vorzugsweise ein offenporiges und/oder offenzelliges Porensystem und/oder -gerüst, aufweist.

7. Adsorptive Struktur nach einem der vorangehenden Ansprüche,
wobei das Porensystem ausgebildet ist durch das mindestens eine Hydrokolloid und die Adsorberpartikel, insbesondere wobei die Adsorberpartikel mittels des Hydrokolloids vorzugsweise punktförmig miteinander verbunden und/oder aneinander fixiert sind und/oder wobei das Porensystem durch die Adsorberpartikel und das Hydrokolloid begrenzte luftgefüllte Hohlräume und/oder Poren aufweist; und/oder
wobei das Verhältnis der mittleren Porengröße des Porensystems der adsorptiven Struktur zu der mittleren Teilchengröße der Adsorberpartikel [mittlere Porengröße des Porensystems : mittlere Teilchengröße der Adsorberpartikel] im Bereich von 0,01 : 1 bis 10.000 : 1, insbesondere 0,2 : 1 bis 1.000 : 1, vorzugsweise 0,5 : 1 bis 500 : 1, bevorzugt 1 : 1 bis 250 : 1, besonders bevorzugt 1,2 : 1 bis 200 : 1, ganz besonders bevorzugt 1,5 : 1 bis 100 : 1, liegt und/oder wobei das Verhältnis der mittleren Porengröße des Porensystems der adsorptiven Struktur zu der mittleren Teilchengröße der Adsorberpartikel [mittlere Porengröße des Porensystems : mittlere Teilchengröße der Adsorberpartikel] mindestens 0,1 : 1, insbesondere mindestens 0,5: 1, vorzugsweise mindestens 1 : 1, bevorzugt mindestens 1,2 : 1, besonders bevorzugt mindestens 1,5 : 1, ganz besonders bevorzugt mindestens 2 : 1, noch mehr bevorzugt mindestens 3: 1, beträgt; und/oder
wobei die adsorptive Struktur Poren mit einem mittleren Porendurchmesser im Bereich von 0,001 bis 10 mm, insbesondere 0,01 bis 8 mm, vorzugsweise 0,05 bis 5 mm, bevorzugt 0,1 bis 3 mm, aufweist.

8. Adsorptive Struktur nach einem der vorangehenden Ansprüche, wobei die adsorptive Struktur monolithisch und/oder einstückig ausgebildet ist; und/oder wobei die adsorptive Struktur zylindrisch, stabförmig, tellerförmig, quaderförmig, polyedrisch oder wabenförmig ausgebildet ist.

9. Verfahren zur Herstellung einer selbsttragenden dreidimensionalen adsorptiven Struktur, insbesondere eines adsorptiven Formkörpers, wie in einem der vorangehenden Ansprüche definiert, wobei das Verfahren die folgenden Schritte in der nachstehend spezifizierten Abfolge (a) bis (c) umfasst:
(a) Herstellung einer Lösung und/oder Dispersion mindestens eines Hydrokolloids, ausgewählt aus der Gruppe von Gelatine, Kollagen, Xanthan, Dextran, Agar, Carrageen, Pektin, Gummi arabicum, Galactomannan sowie deren Mischungen oder Kombinationen;
(b) Inkontaktbringen der in Schritt (a) hergestellten Lösung und/oder Dispersion mit einer Vielzahl von einzelnen kornförmigen Adsorberpartikeln mit absoluten Teilchendurchmessern im Bereich von 0,001 bis 3 mm zum Erhalt einer Suspension der Adsorberpartikel in der Lösung und/oder Dispersion des Hydrokolloids, wobei die Adsorberpartikel in einem massebezogenen Verhältnis von Hydrokolloid zu Adsorberpartikel "[Hydrokolloid : Adsorberpartikel]" im Bereich von [1 : 100] bis [1 : 1], bezogen auf das jeweilige Trockengewicht, eingesetzt werden und
wobei durch Freisetzung von Gasen aus den Adsorberpartikeln und/oder durch Einbringen von Gasen eine Volumenexpansion und/oder Ausbildung eines Schaums und/oder einer porösen Struktur in der Suspension erfolgt, wobei die Volumenexpansion und/oder die Ausbildung einer porösen Struktur durch Eintrag von Scherkräften und Einstellen der Suspension auf Temperaturen im Bereich von 50 bis 150°C gesteuert wird;
(c) Entfernung des Lösungs- und/oder Dispersionsmediums aus der Suspension und Aushärtung zum Erhalt der selbsttragenden dreidimensionalen adsorptiven Struktur.

10. Verfahren nach Anspruch 9,
wobei zur Bereitstellung der Lösung und/oder Dispersion eines Hydrokolloids und/oder in Verfahrensschritt (a) das Lösemittel zum Erhalt der Lösung und/oder Dispersion des mindestens einen Hydrokolloids ausgewählt wird aus der Gruppe von wässrigen und organischen Lösemitteln sowie deren Mischungen oder Kombinationen, insbesondere aus der Gruppe von Wasser, Ethylenglycol, Glycerin, Formamid und Essigsäure sowie deren Mischungen oder Kombinationen, vorzugsweise Wasser; und/oder
wobei zur Bereitstellung der Lösung und/oder Dispersion eines Hydrokolloids und/oder in Verfahrensschritt (a) das mindestens eine Hydrokolloid in einer Menge im Bereich von 0,1 bis 30 Gew.-%, insbesondere im Bereich von 0,5 bis 15 Gew.-%, vorzugsweise im Bereich von 1 bis 10 Gew.-%, bevorzugt im Bereich von 2 bis 8 Gew.-%, bezogen auf das Lösemittel und/oder die Dispersion, eingesetzt wird; und/oder
wobei die Bereitstellung der Lösung und/oder Dispersion eines Hydrokolloids und/oder Verfahrensschritt (a) unter Erwärmen auf Temperaturen im Bereich von 40 bis 120 °C, insbesondere im Bereich von 50 bis 110 °C, vorzugsweise im Bereich von 60 bis 100 °C, bevorzugt im Bereich von 70 bis .90 °C, durchgeführt wird und/oder wobei zur Bereitstellung der Lösung und/oder Dispersion eines Hydrokolloids und/oder in Verfahrensschritt (a) unter Eintrag von Scherkräften, insbesondere unter Rühren,
verfahren wird.

11. Verfahren nach Anspruch 9 oder 10,
wobei bei der Bereitstellung der Suspension einer Vielzahl einzelner Adsorberpartikel in der Lösung und/oder Dispersion des Hydrokolloids und/oder in Verfahrensschritt (b) die Adsorberpartikel in einem massebezogenen Verhältnis von Hydrokolloid zu Adsorberpartikel "[Hydrokolloid : Adsorberpartikel]" im Bereich von [1 : 80] bis [1 : 2], vorzugsweise im Bereich von [1 : 50] bis [1 : 5], bevorzugt im Bereich von [1 : 30] bis [1 : 10], besonders bevorzugt im Bereich von [1 :25] bis [1 : 15], ganz besonders bevorzugt im Bereich von [1 : 22] bis [1 : 18], bezogen auf das jeweilige Trockengewicht, eingesetzt werden; und/oder
wobei bei der Bereitstellung der Suspension einer Vielzahl einzelner Adsorberpartikel in der Lösung und/oder Dispersion des Hydrokolloids und/oder in Verfahrensschritt (b) durch das Inkontaktbringen der bereitgestellten Lösung und/oder Dispersion des mindestens einen Hydrokolloids und/oder der in Schritt (a) hergestellten Lösung und/oder Dispersion mit der Vielzahl von einzelnen Adsorberpartikeln zum Erhalt der Suspension der Adsorberpartikel der Anteil des Lösemittels in der Suspension auf einen Bereich von 20 bis 90 Gew.-%, insbesondere auf einen Bereich von 25 bis 80 Gew.-%, vorzugsweise auf einen Bereich von 30 bis 70 Gew.-%, bevorzugt auf einen Bereich von 35 bis 60 Gew.-%, bezogen auf die Suspension, eingestellt wird.

12. Verfahren nach einem der Ansprüche 9 bis 11,
wobei bei der Entfernung des Lösungs- und/oder Dispersionsmediums und/oder in Verfahrensschritt (c) die Entfernung des Lösungs- und/oder Dispersionsmediums aus der Suspension und Aushärtung unter Ausbildung einer porösen und/oder schaumartigen Struktur erfolgt; und/oder
wobei die Entfernung des Lösungs- und/oder Dispersionsmediums und/oder Verfahrensschritt (c) unter Erwärmen und/oder Einstellung der Suspension auf Temperaturen im Bereich von 70 bis 200°C, insbesondere im Bereich von 90 bis 180 °C, vorzugsweise im Bereich von 100 bis 160°C, besonders bevorzugt im Bereich von 110 bis 150°C, durchgeführt wird; und/oder
wobei die Entfernung des Lösungs- und/oder Dispersionsmediums und/oder Verfahrensschritt (c) unter Erwärmen und/oder Einstellung der Suspension auf Temperaturen von mindestens 70°C, insbesondere mindestens 90 °C, vorzugsweise mindestens 110°C, besonders bevorzugt mindestens 130°C, durchgeführt wird; und/oder
wobei die Entfernung des Lösungs- und/oder Dispersionsmediums und/oder Verfahrensschritt (c) unter gegebenenfalls weiterer Volumenexpansion und/oder unter gegebenenfalls weiterer Ausbildung eines Schaums und/oder einer porösen Struktur, insbesondere durch Einbringen von Gasen, in der Suspension durchgeführt wird; und/oder
wobei die Entfernung des Lösungs- und/oder Dispersionsmediums und/oder Verfahrensschritt (c) unter Formgebung und/oder Ausbildung der selbsttragenden dreidimensionalen adsorptiven Struktur durchgeführt wird
wobei die Entfernung des Lösungs- und/oder Dispersionsmediums und/oder Verfahrensschritt (c) insbesondere zur Aushärtung der Suspension über einen Zeitraum im Bereich von 2 bis 22 Stunden, insbesondere im Bereich von 4 bis 20 Stunden, vorzugsweise im Bereich von 8 bis 18 Stunden, bevorzugt im Bereich von 10 bis 14 Stunden, durchgeführt wird.

13. Verwendung einer selbsttragenden dreidimensionalen adsorptiven Struktur, wie in einem der Ansprüche 1 bis 8 definiert, für die Adsorption von Giftstoffen, Schadstoffen und Gerüchen aus Gas- oder Luftströmen oder aber aus Wasser, und/oder zur Reinigung oder Aufbereitung von Gasen, Gasströmen oder Gasgemischen oder von Wasser.

14. Verwendung einer selbsttragenden dreidimensionalen adsorptiven Struktur, wie in einem der Ansprüche 1 bis 8 definiert, in Adsorptionsfiltern und/oder zur Herstellung von Filtern, insbesondere Adsorptionsfiltern, und/oder als Substrat und/oder Träger(-material) insbesondere für Katalysatoren und/oder katalytische Systeme und/oder reaktive Verbindungen.

15. Filter, umfassend eine selbsttragende dreidimensionale adsorptive Struktur, wie in einem der Ansprüche 1 bis 8 definiert.

## Claims

1. Self-supporting three-dimensional adsorptive structure, in particular adsorptive shaped bodies, wherein the adsorptive structure comprises a plurality of individual adsorber particles,
wherein the individual adsorber particles are connected to a self-supporting three-dimensional adsorptive structure, in particular an adsorptive shaped body, and/or wherein the individual adsorber particles are connected to one another and/or are fixed to one another by means of at least a hydrocolloid and/or are brought into adherence with one another,
wherein the hydrocolloid is selected from the group consisting of gelatin, collagen, xanthan, dextran, agar, carrageenan, pectin, gum arabic, galactomannan, as well as mixtures or combinations thereof,
wherein the adsorber particles are granular-shaped and have absolute particle diameters in the range from 0.001 to 3 mm,
wherein the adsorptive structure comprises the hydrocolloid and the adsorber particles in a mass-related ratio of hydrocolloid to adsorber particles "[hydrocolloid : adsorber particles]" in the range of [1 : 100] to [1 : 1] based on the respective dry weight; and
wherein the adsorptive structure is porous and/or foam-like, and wherein the adsorptive structure comprises a pore system.

2. Adsorptive structure according to claim 1,
wherein the hydrocolloid is a macromolecule and/or a plurality of macromolecules, in particular wherein the macromolecule and/or the hydrocolloid comprises an average molecular weight, in particular a weight-average molecular weight, in the range from 5,000 to 500,000 g/mol, preferably in the range from 10,000 to 400,000 g/mol, preferably in the range from 12,500 to 300,000 g/mol, more preferably in the range from 15,000 to 250,000 g/mol; and/or
wherein the hydrocolloid is gelatin and/or collagen, in particular gelatin.

3. Adsorptive structure according to one of the preceding claims,
wherein the adsorber particles comprise an inner porous structure and/or an inner porous system, and/or wherein the adsorber particles consist of activated carbon and/or the adsorber particles are formed from activated carbon; and/or
wherein the adsorber particles are spherical; and/or
wherein the adsorber particles have absolute particle diameters in the range from 0.005 to 2.5 mm, preferably in the range from 0.01 to 2 mm, particularly preferably in the range from 0.02 to 1.5 mm, most preferably in the range from 0.05 to 1 mm, and/or wherein the adsorber particles have average particle diameters (D50) in the range from 0.01 to 2 mm, in particular in the range from 0.05 to 1.5 mm, preferably in the range from 0.1 to 1 mm; and/or
wherein the adsorber particles consist of a material selected from the group of activated carbon; zeolites; inorganic oxides, in particular silicon dioxides, silica gels and aluminum oxides; molecular sieves; mineral granules; clathrates; organometallic framework materials (MOFs), as well as their mixtures or combinations, particularly preferably activated carbon, and/or wherein the adsorber particles consist of activated carbon and/or wherein the adsorber particles are formed from activated carbon; and/or
wherein the adsorber particles are formed from granular, in particular spherical, activated carbon.

4. Adsorptive structure according to one of the preceding claims,
wherein the adsorber particles, in particular the activated carbon particles, have a specific surface area (BET surface area) of at least 500 m²/g, in particular at least 750 m²/g, preferably at least 1,000 m²/g, particularly preferably at least 1,200 m²/g, and/or wherein the adsorber particles, in particular the active carbon particles, have a specific surface area (BET surface area) in the range from 500 to 4,000 m²/g, in particular in the range from 750 to 3,000 m²/g, preferably in the range from 900 to 2,500 m²/g, particularly preferably in the range of 950 to 2,000 m²/g, and/or
wherein the adsorber particles, in particular the activated carbon particles, have an adsorption volume V_{ads} of at least 250 cm³/g, in particular at least 300 cm³/g, preferably at least 350 cm³/g, particularly preferably at least 400 cm³/g, and/or wherein the adsorber particles, in particular the active carbon particles, have an adsorption volume V_{ads} in the range from 250 to 3,000 cm³/g, in particular in the range from 300 to 2,000 cm³/g, preferably in the range from 350 to 2,500 cm³/g, and/or
wherein the adsorber particles, in particular the activated carbon particles, have a total pore volume according to Gurvich of at least 0.30 cm³/g, in particular at least 0.50 cm³/g, preferably at least 0.55 cm³/g, more preferably at least 0.60 cm³/g, particularly preferably at least 0.65 cm³/g, quite particularly preferably at least 0.70 cm³/g, and/or wherein the adsorber particles, in particular the activated carbon particles, have a total pore volume in accordance with Gurvich in the range from 0.30 to 2.0 cm³/g, in particular in the range from 0.50 to 2.0 cm³/g, preferably in the range from 0.55 to 1.5 cm³/g, more preferably in the range from 0.60 to 1.2 cm³/g, particularly preferably in the range of 0.65 to 1.0 cm³/g, and/or
wherein the adsorber particles, in particular the active carbon particles, have a total porosity in the range from 10% to 80%, in particular 20% to 75%, preferably 25% to 70%; and/or
wherein the adsorber particles, in particular the active carbon particles, have a specific total pore volume in the range from 0.01 to 4.0 cm³/g, in particular in the range from 0.1 to 3.0 cm³/g, preferably in the range from 0.2 to 2 cm³/g, in particular wherein the proportion of pores having pore diameters ≤ 75 Å, in particular ≤ 50 Å, is at least 65%, in particular at least 70%, preferably at least 75%, and/or in particular wherein the proportion of micropores and mesopores is at least about 65%, in particular at least 70%, preferably at least 75%.

5. Adsorptive structure according to one of the preceding claims,
wherein the adsorptive structure comprises the hydrocolloid and the adsorber particles, in particular the activated carbon particles, in a mass-related ratio of hydrocolloid to adsorber particles "[hydrocolloid : adsorber particles]" in the range from [1 : 80] to [1 : 2], preferably in the range from [1 : 50] to [1 : 5], more preferably in the range from [1 : 30] to [1 : 10], particularly preferably in the range from [1 : 25] to [1 : 15], very particularly preferably in the range from [1 : 22] to [1 : 18], based on the respective dry weight; and/or
wherein the adsorptive structure comprises the adsorber particles, in particular the activated carbon particles, in an amount of at least 70 wt.-%, in particular of at least 80 wt.-%, preferably of at least 75 wt.-%, more preferably of at least 90 wt.-%, particularly preferably of at least 95 wt.-%, based on the total weight of the self-supporting structure, and/or wherein the adsorptive structure comprises the adsorber particles, in particular the activated carbon particles, in an amount in the range from 70 to 99 wt.-%, in particular in the range from 80 to 98 wt.-%, preferably in the range from 85 to 97 wt.-%, more preferably in the range from 90 to 96 wt.-%, particularly preferably in the range from 92.5 to 95 wt.-%, based on the total weight of the self-supporting structure; and/or
wherein the adsorptive structure comprises the hydrocolloid in an amount of at most 30 wt.-%, in particular at most 20 wt.-%, preferably at most 15 wt.-%, particularly preferably at most 10 wt.-%, more particularly preferably at most 5 wt.-%,based on the total weight of the adsorptive structure, and/or wherein the adsorptive structure contains the hydrocolloid in an amount in the range from 0.1 to 30 wt.-%, in particular in the range from 1 to 20 wt.-%, preferably in the range from 2 to 15 wt.-%, particularly preferably in the range from 3 to 10 wt.-%, very particularly preferably in the range from 4 to 7 wt.-%, based on the total weight of the adsorptive structure.

6. Adsorptive structure according to one of the preceding claims,
wherein the adsorber particles, in particular the activated carbon particles, are brought into contact with the hydrocolloid by wetting and /or the adsorber particles and the hydrocolloid in their entirety form a framework and/or a matrix of the hydrocolloid; and/or
wherein the adsorptive structure comprises an open-pore and/or open-cell pore system and/or framework or a closed and/or closed-cell pore system and/or framework, preferably an open-pore and/or open-cell pore system and/or framework.

7. Adsorptive structure according to one of the preceding claims,
wherein the pore system is formed by the at least one hydrocolloid and the adsorber particles, in particular wherein the adsorber particles are connected to one another and/or are fixed to one another by means of the hydrocolloid, and/or are fixed to one another and/or wherein the pore system comprises air-filled cavities limited by the adsorption particles and the hydrocolloid and/or pores; and/or
wherein the ratio of the average pore size of the porous system of the adsorptive structure to the average particle size of the adsorber particles is: [average pore size of the pore system : average particle size of the adsorber particles] is in the range from 0.01 : 1 to 10,000 : 1, in particular 0.2 : 1 to 1,000 : 1, preferably from 0.5 : 1 to 500 : 1, more preferably from 1 : 1 to 250 : 1, particularly preferably from 1.2 : 1 to 200 : 1, most preferably from 1.5 : 1 to 100 : 1, and/or the ratio of the average pore size of the porous system of the adsorptive structure to the average particle size of the adsorber particles [average pore size of the pore system : average particle size of the adsorber particles] is at least 0.1 : 1, in particular at least 0.5 : 1, preferably at least 1 : 1, more preferably at least 1.2 : 1, particularly preferably at least 1.5 : 1, quite particularly preferably at least 2 : 1, even more preferably at least 3 : 1; and/or
wherein the adsorptive structure has pores with an average pore diameter in the range from 0.001 to 10 mm, in particular 0.01 to 8 mm, preferably 0.05 to 5 mm, more preferably 0.1 to 3 mm.

8. Adsorptive structure according to one of the preceding claims,
wherein the adsorptive structure is monolithic and/or integral; and/or wherein the adsorptive structure is cylindrical, rod-shaped, plate-shaped, cuboidal, polyhedral or honeycomb-shaped.

9. Method for producing a self-supporting three-dimensional adsorptive structure, in particular an adsorptive shaped body, as defined in one of the preceding claims, wherein the method comprises the following steps in the following sequence (a) to (c):
(a) preparing a solution and/or dispersion of at least one hydrocolloid selected from the group of gelatin, collagen, xanthan, dextran, agar, carrageenan, pectin, gum arabic, galactomannan as well as mixtures thereof;
(b) bringing into contacting the solution and/or dispersion produced in step (a) with a plurality of individual granular adsorber particles having absolute particle diameters in the range of 0.001 to 3 mm in order to obtain a suspension of the adsorber particles in the solution and/or dispersion of the hydrocolloid, wherein the adsorber particles are used in a mass-related ratio of hydrocolloid to adsorber particles "[hydrocolloid : adsorber particles]" in the range from [1 : 100] to [1 : 1], based on the respective dry weight;
wherein a volume expansion and/or formation of a foam and/or of a porous structure takes place in the suspension by the release of gases from the adsorber particles and/or by introducing gases, wherein the volume expansion and/or the formation of a porous structure is produced by the introduction of shear forces and adjustment of the suspension to temperatures in the range of 50 to 150 °C;
(c) removal of the solution and/or dispersion medium from the suspension and curing to obtain the self-supporting three-dimensional adsorptive structure.

10. Method according to claim 9,
wherein the solvent for obtaining the solution and/or dispersion of the at least one hydrocolloid and/or in method step (a) is selected from the group consisting of aqueous and organic solvents, as well as mixtures or combinations thereof, in particular from the group of water, ethylene glycol, glycerol, formamide and acetic acid and mixtures thereof or combinations thereof, preferably water; and/or
wherein to prepare the solution and/or the dispersion of a hydrocolloid and/or in method step (a), the at least one hydrocolloid is added in an amount in the range from 0.1 to 30 wt.-%, in particular in the range from 0.5 to 15 wt.-%, preferably in the range from 1 to 10 wt.-%, more preferably in the range from 2 to 8 wt.-%, based on the solution and/or the dispersion; and/or
wherein the solution and/or dispersion of a hydrocolloid and/or method step (a) is carried out by heating to temperatures in the range from 40 to 120 °C, in particular in the range from 50 to 110 °C, preferably in the range from 60 to 100 °C, more preferably in the range from 70 to 90 °C, and/or wherein the solution and/or dispersion of a hydrocolloid and/or in method step (a) is carried out with the addition of shear forces, in particular through stirring.

11. Method according to claim 9 or 10,
wherein in the preparation of the suspension of a number of individual adsorber particles in the solution and/or dispersion of the hydrochloride and/or in method step (b), the adsorber particles are added in a mass-related ratio of hydrocolloid to adsorber particles "[hydrocolloid : adsorber particles]" in the range of [1 : 80] to [1: 2], preferably in the range from [1 : 50] to [1 : 5], more preferably in the range from [1 : 30] to [1 : 10], particularly preferably in the range from [1 : 25] to [1: 15], very particularly preferably in the range from [1 : 22] to [1 : 18], based on the respective dry weight; and/or
wherein in the preparation of the suspension of a number of individual adsorber particles in the solution and/or dispersion of the hydrochloride and/or in method step (b) through the bringing into contact of the prepared solution and/or dispersion of the at least one hydrocolloid and/or of the at least one hydrocolloid produced in step (a), in the solution and/or dispersion of the hydrocolloid and/or the proportion of the solvent in the suspension with the plurality of individual adsorber particles, the proportion of solvent in the suspension is adjusted to a range from 20 to 90 wt.-%, in particular to a range from 25 to 80 wt.-%, preferably in a range from 30 to 70 wt.-%, preferably in a range from 35 to 60 wt.-%, based on the suspension.

12. Method according to one of the claims 9 to 11,
wherein removal of the solvent and/or dispersion medium from the suspension and/or the removal of the solvent and/or dispersion medium in method step (c) takes place to form a porous and/or foam-like structure and curing; and/or
wherein the removal of the solvent and/or dispersion medium and/or method step (c) is carried out with heating and/or adjustment of the suspension to temperatures in the range from 70 to 200 °C, in particular in the range from 90 to 180 °C, preferably in the range from 100 to 160 °C, more preferably in the range from 110 to 150 °C, and/or
wherein the removal of the solvent and/or dispersion medium and/or method step (c) is carried out with heating and/or adjusting the suspension to temperatures of at least 70 °C, in particular at least 90 °C, preferably at least 110 °C, more preferably at least 130 °C,; and/or
wherein the removal of the solvent and/or dispersion medium and/or method step (c) is carried out in the suspension, with optionally further volume expansion and/or under further formation of a foam and/or a porous structure, in particular by introducing gases; and/or
wherein the removal of the solvent and/or dispersion medium and/or method step (c) is carried out with the shaping and/or formation of the self-supporting three-dimensional adsorptive structure,
wherein the removal of the solvent and/or dispersion medium and/or method step (c) is carried out in particular for curing the suspension over a period in the range from 2 to 22 h, in particular in the range from 4 to 20 h, preferably in the range from 8 to 18 h, more preferably in the range from 10 to 14 h.

13. Use of a self-supporting three-dimensional adsorptive structure as defined in one of the claims 1 to 8 for the adsorption of toxins, pollutants and odors from gas or air streams or else from water and/or for the purification or treatment of gases, gas streams or gas mixtures or water.

14. Use of a self-supporting three-dimensional adsorptive structure as defined in one of the claims 1 to 8 in adsorption filters and/or for the manufacture of filters, in particular adsorption filters, and/or as a substrate and/or carrier(material), in particular for catalysts and/or catalytic systems and/or reactive compounds.

15. A filter comprising a self-supporting three-dimensional adsorptive structure as defined in any one of the claims 1 to 8.

## Revendications

1. Structure adsorbante tridimensionnelle autoportante, en particulier objet façonné adsorbant, la structure adsorbante comprenant un grand nombre de particules adsorbantes individuelles,
dans laquelle les particules adsorbantes individuelles sont, par l'intermédiaire d'au moins un hydrocolloïde, assemblées pour former une structure adsorbante tridimensionnelle autoportante, en particulier un objet façonné adsorbant, et/ou dans laquelle les particules adsorbantes individuelles sont, par l'intermédiaire d'au moins un hydrocolloïde, assemblées les unes aux autres et/ou fixées les unes aux autres et/ou mises à adhérer les unes aux autres,
dans laquelle l'hydrocolloïde est choisi dans le groupe consistant en la gélatine, le collagène, la gomme xanthane, le dextran, la gélose, la mousse d'Irlande, la pectine, la gomme arabique, le galactomannane, ainsi que les mélanges ou combinaisons de ceux-ci,
dans laquelle les particules adsorbantes ont une configuration granulaire et présentent un diamètre moyen des particules compris dans la plage de 0,001 à 3 mm,
la structure adsorbante comprenant l'hydrocolloïde et les particules adsorbantes selon un rapport en masse de l'hydrocolloïde aux particules adsorbantes "[hydrocolloïde : particules adsorbantes]" compris dans la plage de [1:100] à [1:1], par rapport à l'extrait sec de chacun d'eux, et
la structure adsorbante ayant une configuration poreuse et/ou de type mousse, la structure adsorbante comprenant un système de pores.

2. Structure adsorbante selon la revendication 1,
dans laquelle l'hydrocolloïde est une macromolécule et/ou présente un grand nombre de macromolécules, en particulier dans laquelle la macromolécule et/ou l'hydrocolloïde ont une masse moléculaire, en particulier une masse moléculaire moyenne en masse, comprise dans la plage de 5000 à 500000 g/mol, en particulier dans la plage de 10000 à 400000 g/mol, de préférence dans la plage de 12500 à 300000 g/mol, préférentiellement dans la plage de 15000 à 250000 g/mol, et/ou
dans laquelle l'hydrocolloïde est la gélatine et/ou le collagène, en particulier la gélatine.

3. Structure adsorbante selon l'une des revendications précédentes,
dans laquelle les particules adsorbantes présentent une structure poreuse interne et/ou un système de pores internes, et/ou dans laquelle les particules adsorbantes sont constituées de charbon actif et/ou dans laquelle les particules adsorbantes sont formées de charbon actif ; et/ou
dans laquelle les particules adsorbantes ont une configuration sphérique ; et/ou
dans laquelle les particules adsorbantes ont un diamètre absolu des particules compris dans la plage de 0,005 à 2,5 mm, de préférence dans la plage de 0,01 à 2 mm, d'une manière particulièrement préférée dans la plage de 0,02 à 1,5 mm, d'une manière tout particulièrement préférée dans la plage de 0,05 à 1 mm, et/ou dans laquelle les particules adsorbantes ont un diamètre moyen des particules (D50) compris dans la plage de 0,01 à 2 mm, en particulier dans la plage de 0,05 à 1,5 mm, de préférence dans la plage de 0,1 à 1 mm ; et/ou
dans laquelle les particules adsorbantes sont constituées d'un matériau qui est choisi dans le groupe du charbon actif ; des zéolites ; des oxydes inorganiques, en particulier les dioxydes de silicium, les gels de silice et les oxydes d'aluminium ; des tamis moléculaires ; des granulats minéraux ; des clathrates ; des structures organométalliques (MOF), ainsi que les mélanges ou combinaisons de ceux-ci, d'une manière particulièrement préférée du charbon actif, et/ou dans laquelle les particules adsorbantes sont constituées de charbon actif et/ou dans laquelle les particules adsorbantes sont formées de charbon actif ; et/ou
dans laquelle les particules adsorbantes sont formées de charbon actif granulaire, en particulier sphérique.

4. Structure adsorbante selon l'une des revendications précédentes,
dans laquelle les particules adsorbantes, en particulier les particules de charbon actif, présentent une aire spécifique (aire BET) d'au moins 500 m²/g, en particulier d'au moins 750 m²/g, de préférence d'au moins 1000 m²/g, d'une manière particulièrement préférée d'au moins 1200 m²/g, et/ou dans laquelle les particules adsorbantes, en particulier les particules de charbon actif, présentent une aire spécifique (aire BET) comprise dans la plage de 500 à 4000 m²/g, en particulier dans la plage de 750 à 3000 m²/g, de préférence dans la plage de 900 à 2500 m²/g, d'une manière particulièrement préférée dans la plage de 950 à 2000 m²/g ; et/ou
dans laquelle les particules adsorbantes, en particulier les particules de charbon actif, présentent un volume d'adsorption V_{ads} d'au moins 250 cm³/g, en particulier d'au moins 300 cm³/g, de préférence d'au moins 350 cm³/g, d'une manière particulièrement préférée d'au moins 400 cm³/g, et/ou dans laquelle les particules adsorbantes, en particulier les particules de charbon actif, présentent un volume d'adsorption V_{ads} compris dans la plage de 250 à 3000 cm³/g, en particulier dans la plage de 300 à 2000 cm³/g, de préférence dans la plage de 350 à 2500 cm³/g ; et/ou
dans laquelle les particules adsorbantes, en particulier les particules de charbon actif, présentent un volume total des pores selon Gurvich d'au moins 0,30 cm³/g, en particulier d'au moins 0,50 cm³/g, de préférence d'au moins 0,55 cm³/g, préférentiellement d'au moins 0,60 cm³/g, d'une manière particulièrement préférée d'au moins 0,65 cm³/g, d'une manière tout particulièrement préférée d'au moins 0,70 cm³/g, et/ou dans laquelle les particules adsorbantes, en particulier les particules de charbon actif, présentent un volume total des pores selon Gurvich compris dans la plage de 0,30 à 2,0 cm³/g, en particulier dans la plage de 0,50 à 2,0 cm³/g, de préférence dans la plage de 0,55 à 1,5 cm³/g, préférentiellement dans la plage de 0,60 à 1,2 cm³/g, d'une manière particulièrement préférée dans la plage de 0,65 à 1,0 cm³/g ; et/ou
dans laquelle les particules adsorbantes, en particulier les particules de charbon actif, présentent une porosité totale comprise dans la plage de 10 % à 80 %, en particulier de 20 à 75 %, de préférence de 25 % à 70 % ; et/ou
dans laquelle les particules adsorbantes, en particulier les particules de charbon actif, présentent un volume spécifique total des pores compris dans la plage de 0,01 à 4,0 cm³/g, en particulier dans la plage de 0,1 à 3,0 cm³/g, de préférence dans la plage de 0,2 à 2,0 cm³/g, en particulier dans laquelle la proportion des pores ayant un diamètre de pore ≤ 75 Å, en particulier ≤ 50 Å, est d'au moins 65 %, en particulier d'au moins 70 %, de préférence d'au moins 75 %, et/ou en particulier dans laquelle la proportion des micro- et des mésopores est d'au moins 65 %, en particulier d'au moins 70 %, de préférence d'au moins 75 %.

5. Structure adsorbante selon l'une des revendications précédentes,
la structure adsorbante comprenant l'hydrocolloïde et les particules adsorbantes, en particulier les particules de charbon actif, selon un rapport en masse de l'hydrocolloïde aux particules adsorbantes "[hydrocolloïde : particules adsorbantes]", compris dans la plage de [1:80] à [1:2], de préférence dans la plage de [1:50] à [1:5], préférentiellement dans la plage de [1:30] à [1:10], d'une manière particulièrement préférée dans la plage de [1:25] à [1:15], d'une manière tout particulièrement préférée dans la plage de [1:22] à [1:18], par rapport à l'extrait sec de chacun d'eux ; et/ou
la structure adsorbante comprenant les particules adsorbantes, en particulier les particules de charbon actif, en une quantité d'au moins 70 % en poids, en particulier d'au moins 80 % en poids, de préférence d'au moins 75 % en poids, préférentiellement d'au moins 90 % en poids, d'une manière particulièrement préférée d'au moins 95 % en poids, par rapport au poids total de la structure autoportante, et/ou la structure adsorbante comprenant les particules adsorbantes, en particulier les particules de charbon actif, en une quantité comprise dans la plage de 70 à 99 % en poids, en particulier dans la plage de 80 à 98 % en poids, de préférence dans la plage de 85 à 97 % en poids, préférentiellement dans la plage de 90 à 96 % en poids, d'une manière particulièrement préférée dans la plage de 92,5 à 95 % en poids, par rapport au poids total de la structure autoportante ; et/ou
la structure adsorbante comprenant l'hydrocolloïde en une quantité d'au plus 30 % en poids, en particulier d'au plus 20 % en poids, de préférence d'au plus 15 % en poids, d'une manière particulièrement préférée d'au plus 10 % en poids, d'une manière tout particulièrement préférée d'au plus 5 % en poids, par rapport au poids total de la structure adsorbante, et/ou la structure adsorbante comprenant l'hydrocolloïde en une quantité comprise dans la plage de 0,1 à 30 % en poids, en particulier dans la plage de 1 à 20 % en poids, de préférence dans la plage de 2 à 15 % en poids, d'une manière particulièrement préférée dans la plage de 3 à 10 % en poids, d'une manière tout particulièrement préférée dans la plage de 4 à 7 % en poids, par rapport au poids total de la structure adsorbante.

6. Structure adsorbante selon l'une des revendications précédentes,
dans laquelle les particules adsorbantes, en particulier les particules de charbon actif, sont mises en contact par mouillage avec l'hydrocolloïde, et/ou dans laquelle les particules adsorbantes et l'hydrocolloïde forment, dans leur totalité, une charpente et/ou une matrice de l'hydrocolloïde, et/ou
la structure adsorbante présentant un système et/ou une charpente de pores à pores ouverts et/ou à alvéoles ouverts, ou un système et/ou une charpente de pores fermé et/ou à alvéoles fermés, de préférence un système et/ou une charpente de pores à pores ouverts et/ou à alvéoles ouverts.

7. Structure adsorbante selon l'une des revendications précédentes,
dans laquelle le système de pores est constitué du ou des hydrocolloïdes et des particules adsorbantes, en particulier dans laquelle les particules adsorbantes sont, par l'intermédiaire de l'hydrocolloïde, assemblées les unes aux autres et/ou fixées les unes aux autres de préférence d'une manière ponctuelle, et/ou dans laquelle le système de pores comprend des cavités et/ou des pores remplis d'air, délimités par les particules absorbantes et l'hydrocolloïde ; et/ou
dans laquelle le rapport entre la grosseur moyenne des pores du système de pores de la structure adsorbante et la granulométrie moyenne des particules adsorbantes [granulométrie moyenne des pores du système de pores : granulométrie moyenne des particules adsorbantes] est compris dans la plage de 0,01:1 à 10000:1, en particulier de 0,2:1 à 1000:1, de préférence de 0,5:1 à 500:1, préférentiellement de 1:1 à 250:1, d'une manière particulièrement préférée de 1,2:1 à 200:1, d'une manière tout particulièrement préférée de 1,5:1 à 100:1, et/ou dans laquelle le rapport entre la grosseur moyenne des pores du système de pores de la structure adsorbante et la granulométrie moyenne des particules adsorbantes [grosseur moyenne des pores du système de pores : granulométrie moyenne des particules adsorbantes] est d'au moins 0,1:1, en particulier d'au moins 0,5:1, de préférence d'au moins 1:1, préférentiellement d'au moins 1,2:1, d'une manière particulièrement préférée d'au moins 1,5:1, d'une manière tout particulièrement préférée d'au moins 2:1, d'une manière encore plus préférée d'au moins 3:1 ; et/ou
la structure adsorbante comprenant des pores ayant un diamètre moyen des pores compris dans la plage de 0,001 à 10 mm, en particulier de 0,01 à 8 mm, de préférence de 0,05 à 5 mm, préférentiellement de 0,1 à 3 mm.

8. Structure adsorbante selon l'une des revendications précédentes, la structure adsorbante ayant une configuration monolithique et/ou en une seule pièce, et/ou la structure adsorbante étant configurée sous forme d'un cylindre, d'une barre, d'un disque, d'un parallélépipède, d'un polyèdre ou en nid d'abeilles.

9. Procédé de fabrication d'une structure adsorbante tridimensionnelle autoportante, en particulier d'un objet façonné adsorbant, tel que défini dans l'une des revendications précédentes, le procédé comprenant les étapes suivantes, dans l'ordre (a) à (c) spécifié ci-après :
(a) fabrication d'une solution et/ou d'une dispersion d'au moins un hydrocolloïde, choisi dans le groupe consistant en la gélatine, le collagène, la gomme xanthane, le dextran, la gélose, la mousse d'Irlande, la pectine, la gomme arabique, le galactomannane, ainsi que les mélanges ou combinaisons de ceux-ci ;
(b) mise en contact de la solution et/ou de la dispersion fabriquées dans l'étape (a) avec un grand nombre de particules adsorbantes granulaires individuelles ayant un diamètre absolu de particule compris dans la plage de 0,001 à 3 mm, pour obtenir une suspension des particules adsorbantes dans la solution et/ou dans la dispersion de l'hydrocolloïde, les particules adsorbantes étant utilisées selon un rapport en masse de l'hydrocolloïde aux particules adsorbantes "[hydrocolloïde : particules adsorbantes]" compris dans la plage de [1:100] à [1:1], par rapport à l'extrait sec de chacun d'eux, et
où, par libération de gaz à partir des particules adsorbantes et/ou par introduction de gaz, il se produit une dilatation en volume et/ou une formation d'une mousse et/ou d'une structure poreuse dans la suspension, la dilatation du volume et/ou la formation d'une structure poreuse étant pilotées par l'application de forces de cisaillement et l'ajustement de la suspension à des températures comprises dans la plage de 50 à 150°C ;
(c) élimination, à partir de la suspension, du milieu de dissolution et/ou de dispersion, et durcissement pour obtenir la structure adsorbante tridimensionnelle autoportante.

10. Procédé selon la revendication 9,
dans lequel, pour mettre à disposition la solution et/ou la dispersion d'un hydrocolloïde, et/ou dans l'étape (a) du procédé, le solvant destiné à obtenir la solution et/ou la dispersion du ou des hydrocolloïdes est choisi dans le groupe consistant en les solvants aqueux et organiques, ainsi que les mélanges ou combinaisons de ceux-ci, en particulier dans le groupe consistant en l'eau, l'éthylèneglycol, le glycérol, le formamide et l'acide acétique, ainsi que les mélanges ou combinaisons de ceux-ci, de préférence l'eau ; et/ou
dans lequel, pour mettre à disposition la solution et/ou la dispersion d'un hydrocolloïde et/ou dans l'étape (a) du procédé, le ou les hydrocolloïdes sont utilisés en une quantité comprise dans la plage de 0,1 à 30 % en poids, en particulier dans la plage de 0,5 à 15 % en poids, de préférence dans la plage de 1 à 10 % en poids, préférentiellement dans la plage de 2 à 8 % en poids, par rapport au solvant et/ou à la dispersion ; et/ou
dans lequel la mise disposition de la solution et/ou de la dispersion d'un hydrocolloïde et/ou l'étape (a) du procédé sont mises en oeuvre par chauffage à des températures comprises dans la plage de 40 à 120°C, en particulier dans la plage de 50 à 110°C, de préférence dans la plage de 60 à 100°C, préférentiellement dans la plage de 70 à 90°C, et/ou dans lequel, pour la mise à disposition de la solution et/ou de la dispersion d'un hydrocolloïde et/ou dans l'étape (a) du procédé, on procède par application de forces de cisaillement, en particulier sous agitation.

11. Procédé selon la revendication 9 ou 10,
dans lequel, lors de la mise à disposition de la suspension d'un grand nombre de particules adsorbantes individuelles dans la solution et/ou la dispersion de l'hydrocolloïde et/ou dans l'étape (b) du procédé, les particules adsorbantes sont utilisées selon un rapport en masse de l'hydrocolloïde aux particules adsorbantes "[hydrocolloïde : particules adsorbantes]", compris dans la plage de [1:80] à [1:2], de préférence dans la plage de [1:50] à [1:5], préférentiellement dans la plage de [1:30] à [1:10], d'une manière particulièrement préférée dans la plage de [1:25] à [1:15], d'une manière tout particulièrement préférée dans la plage de [1:22] à [1:18], par rapport à l'extrait sec de chacun d'eux ; et/ou
dans lequel, lors de la mise en oeuvre de la suspension d'un grand nombre de particules adsorbantes individuelles dans la solution et/ou la dispersion de l'hydrocolloïde et/ou dans l'étape (b) du procédé, sous l'effet de la mise en contact de la solution et/ou de la dispersion mise à disposition du ou des hydrocolloïdes et/ou de la solution et/ou de la dispersion fabriquées dans l'étape (a) avec le grand nombre de particules adsorbantes individuelles pour obtenir la suspension des particules adsorbantes, on ajuste la proportion du solvant dans la solution à une valeur comprise dans la plage de 20 à 90 % en poids, en particulier à une valeur comprise dans la plage de 25 à 80 % en poids, de préférence à une valeur comprise dans la plage de 30 à 70 % en poids, de préférence à une valeur comprise dans la plage de 35 à 60 % en poids, par rapport à la suspension.

12. Procédé selon l'une des revendications 9 à 11,
dans lequel, lors de l'élimination du milieu de dissolution et/ou de dispersion et/ou dans l'étape (c) du procédé, l'élimination du milieu de dissolution et/ou de dispersion, à partir de la suspension, et le durcissement, sont réalisés avec formation d'une structure poreuse et/ou expansée ; et/ou
dans lequel l'élimination du milieu de dissolution et/ou de dispersion et/ou l'étape (c) du procédé sont mis en oeuvre par chauffage et/ou par ajustement de la suspension à des températures comprises dans la plage de 70 à 200°C, en particulier dans la plage de 90 à 180°C, de préférence dans la plage de 100 à 160°C, d'une manière particulièrement préférée dans la plage de 110 à 150°C ; et/ou
dans lequel l'élimination du milieu de dissolution et/ou de dispersion et/ou l'étape (c) du procédé sont mises en oeuvre par chauffage et/ou ajustement de la suspension à des températures d'au moins 70°C, en particulier d'au moins 90°C, de préférence d'au moins 110°C, d'une manière particulièrement préférée d'au moins 130°C ; et/ou
dans lequel l'élimination du milieu de dissolution et/ou de dispersion et/ou l'étape (c) du procédé sont mises en oeuvre en présence d'une éventuelle dilatation supplémentaire en volume et/ou en présence d'une formation éventuellement supplémentaire d'une mousse et/ou d'une structure poreuse, en particulier par introduction de gaz, dans la suspension ; et/ou
dans lequel l'élimination du milieu de dissolution et/ou de dispersion et/ou l'étape (c) du procédé sont mises en oeuvre avec façonnage et/ou réalisation de la structure adsorbante tridimensionnelle autoportante,
dans lequel l'élimination du milieu de dissolution et/ou de dispersion et/ou l'étape (c) du procédé sont mises en oeuvre en particulier pour durcir la suspension sur un laps de temps compris dans la plage de 2 à 22 heures, en particulier dans la plage de 4 à 20 heures, de préférence dans la plage de 8 à 18 heures, préférentiellement dans la plage de 10 à 14 heures.

13. Utilisation d'une structure adsorbante tridimensionnelle autoportante telle que définie dans l'une des revendications 1 à 8, pour l'adsorption de substances toxiques, de substances nocives et d'odeurs, à partir de flux de gaz ou d'air, ou cependant d'eau, et/ou pour purifier ou préparer des gaz, des courants gazeux ou des mélanges gazeux, ou de l'eau.

14. Utilisation d'une structure adsorbante tridimensionnelle autoportante telle que définie dans l'une des revendications 1 à 8, dans des filtres à adsorption et/ou pour fabriquer des filtres, en particulier des filtres à adsorption, et/ou en tant que substrat et/ou (matériau)support, en particulier pour des catalyseurs et/ou des systèmes catalytiques et/ou des composés réactifs.

15. Filtre, comprenant une structure adsorbante tridimensionnelle autoportante telle que définie dans l'une des revendications 1 à 8.
